(19) Europäisches Patentamt
European Patent Office
Office européen des brevets

(11) **EP 2 178 230 A1**

(12) **EUROPEAN PATENT APPLICATION**

(43) Date of publication:
21.04.2010 Bulletin 2010/16

(51) Int Cl.:
*H04J 3/06* (2006.01)  *H04W 88/06* (2009.01)
*H04L 12/28* (2006.01)

(21) Application number: 08305681.2

(22) Date of filing: **14.10.2008**

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: **Thomson Licensing**
**92443 Issy-les-Moulineaux Cedex (FR)**

(72) Inventors:
• **Ma, Xiao Jun**
**Beijing 100085 (CN)**

• **Zhang, Zhigang**
**Beijing 100085 (CN)**
• **Cheng, Linxiang**
**Beijing 100085 (CN)**
• **Zhang, Yanfeng**
**Beijing 100085 (CN)**
• **Wang, Xian Lei**
**Beijing 100085 (CN)**

(74) Representative: **Ruellan-Lemonnier, Brigitte**
**Thomson**
**1, rue Jeanne d'Arc**
**92443 Issy-les-Moulineaux Cedex (FR)**

(54) **Performance improvement of dual mode devices for data over cable applications**

(57) A method of improving throughput for a wireless interface of a dual mode device operating as a user-terminal of a data system connected to a cable network includes receiving synchronization information from the cable network via a time division multiplexed protocol. The synchronization information includes timing information for uplink and downlink time opportunities in the time division multiplexed protocol. The user terminal determines available wireless interface operation time based on the timing information. The user terminal then switches from a time division multiplexed protocol mode operating at a first frequency to a wireless mode operating at a second frequency based on the determined opportunity for wireless operation time.

Fig. 1

EP 2 178 230 A1

**Description**

FIELD OF THE INVENTION

The present invention relates to data transmission technology, and particularly to a method for improving uplink accessibility in a cable system employing a time division multiplexed protocol.

BACKGROUND

There are some existing specifications which define the communications and operational support interface requirements for a data-over-cable system. One of these specifications is data over cable service interface specification (DOCSIS), an international standard which permits the addition of high-speed data transfer to an existing cable television (CATV) system and is employed by many cable television operators to provide Internet access over their existing hybrid fiber coaxial (HFC) infrastructure.

Cable modems based on solutions such as DOCSIS are expensive and are not suitable to provide a quality of service (QoS) that is sensitive to real time audio communication and video streaming services in cable networks. It is desirable to develop a new system to transmit data through a CATV cable access network which can guarantee good quality of service (QoS) and leverages off of existing standard protocols at a reasonable cost. A user-terminal device or modem which operates on an existing CATV system and provides data services, such as wireless connectivity to an internet protocol network, is also desirable in a cable data system. In such a modem, reasonable opportunity to support both a cable interface and a wireless interface is sought to ensure sufficient bandwidth availability for a good quality user experience.

SUMMARY

The present invention is directed to methods and devices which provide a modem/station/device with ample opportunity to communicate with wireless devices to provide data services to users over a cable access network. In a dual mode modem device, where the device operates in either a cable access mode or a wireless access mode, increasing the opportunities for communication translates to increased throughput for user wireless devices. In one aspect of the invention, a dual mode device receives synchronization information via a cable interface and uses that information to calculate opportunities for wireless communication with wireless user devices when the time division multiplexed cable interface is not sending or receiving information to the modem. The opportunities for wireless mode operation are realized by switching the modem from a cable interface mode/time division multiplex mode/time division function mode to a wireless interface mode/wireless local area network mode. The cable interface operates using a time division multiplex protocol and the wireless mode operates using standard wireless protocols. Some frame formats for data are used in both the time division multiplexed mode and the wireless mode.

In one embodiment, a method for increased availability corresponds with increased time in a wireless interface mode. For a modem/station/device, a method includes receiving synchronization information by a modem on a cable network, the synchronization information has a timeslot allocation number for operation of the device using a time division multiplexed protocol which incorporates wireless protocol frames transmitted on a cable network, the modem includes a cable interface using the time division multiplexed protocol and a wireless interface. A time to operate the wireless interface is calculated based on the timeslot allocation number. The modem or station is then switched from a time division multiplexed protocol mode to a wireless mode based on the calculated time to operate the wireless interface.

In one embodiment, the modem or station includes a cable interface for transferring digital information using a time division multiplexed protocol. The cable interface connects to a cable network providing access to a data network. The station also includes a wireless local area network interface for communicating with wireless devices using a wireless protocol, a processor for determining a time for operation of the wireless local area network interface, and a switching function that changes operation of the modem from a first mode using the time division multiplex protocol to a second mode using the wireless access protocol. The switching function operates the modem in the second mode while the cable network is downloading data to another modem connected to the cable network. The cable, cable interface, and cable network may accommodate any form of cable such as optical fiber, coaxial, or other physically connected communications medium.

Additional features and advantages of the invention will be made apparent from the following detailed description of illustrative embodiments which proceeds with reference to the accompanying figures.

BRIEF DESCRIPTION OF THE DRAWINGS

Fig. 1 illustrates a simplified exemplary TDF access network architecture;

Fig. 2 illustrates the 802.11 MAC sublayer in OSI reference model;

Fig. 3 illustrates an implementation of a TDF transmission entity in OSI reference model;

Fig. 4 illustrates an implementation of a mode entrance procedure;

Fig. 5 illustrates an implementation of a TDF superframe structure;

Fig. 6 illustrates an implementation of a registration procedure;

Fig. 7 illustrates an implementation of an unregistration procedure;

Fig. 8 illustrates an implementation of an alive notification procedure;

Fig. 9 includes a system diagram that depicts an implementation of a TDF network;

Fig. 10 includes a block diagram of an implementation of an AP and a modem from Fig. 9;

Fig. 11 includes a flow diagram of an implementation of an uplink transmission process;

Fig. 12 includes a diagram of an implementation of a one-to-one mapping between an Ethernet packet and a WLAN packet;

Fig. 13 includes a diagram of an implementation of a transformation between multiple Ethernet packets and a single WLAN packet;

Fig. 14 includes a diagram depicting packet flow in the transformation of Fig. 13;

Fig. 15 includes a diagram of an implementation of an EIW header from Fig. 14;

Fig. 16 includes a flow diagram of an implementation of an uplink reception process;

Fig. 17 includes a diagram depicting an implementation for decapsulating packets;

Fig. 18 includes a diagram depicting an implementation of a PADM from Fig. 10;

Fig. 19 includes a flow diagram of an implementation of a downlink transmission process;

Fig. 20 includes a flow diagram of an implementation of a downlink reception process;

Fig. 21 is a block diagram of an ADoC STA;

Fig. 22 is a block diagram of an ADoC STA having a dual mode device according to an implementation;

Fig. 23 is a block diagram of a hardware implementation of the ADoC STA dual mode device;

Fig. 24 is a block diagram of another hardware implementation of the ADoC STA dual mode device;

Fig. 25 is a block diagram of an implementation of the dual mode device into a modem of Fig. 10;

Fig. 26 is an example timeslot allocation map (TSAM) for a beacon frame; and

Fig. 27 is a flow diagram of an example mode switching process.

DETAILED DISCUSSION OF THE EMBODIMENTS

General Description

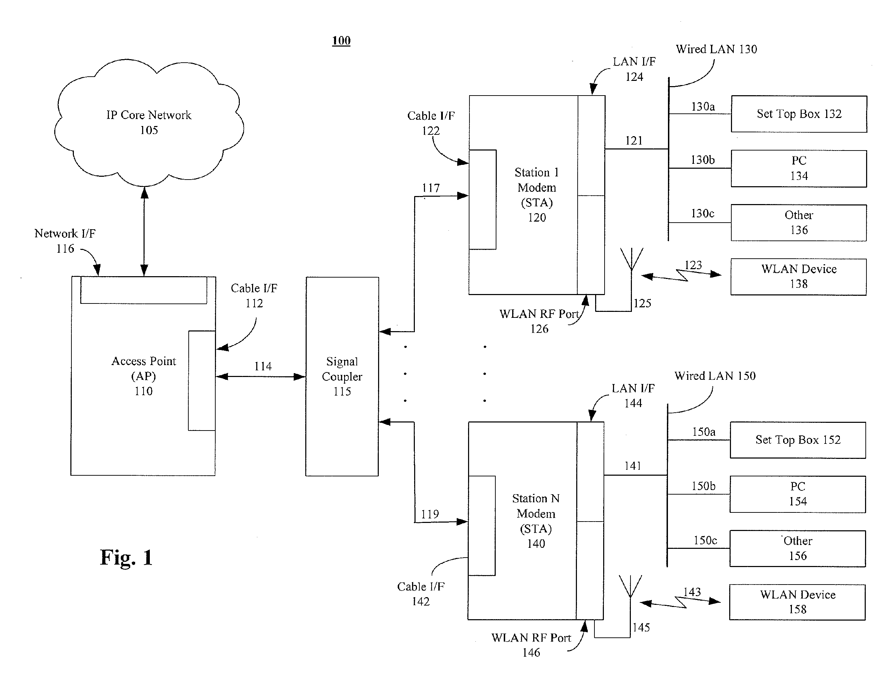

As used herein, "/" denotes alternative names for the same or similar components or structures. That is, a "/" can be taken as meaning "or" as used herein. Unicast transmissions are between a single sender/transmitter and a single receiver. Broadcast transmissions are between a single sender/transmitter and all receivers within receiving range of the transmitter. Multicast transmissions are between a single sender/transmitter and a subset of the receivers within receiving range of the transmitter where the subset of receivers within receiving range of the transmitter may be the entire set. That is, multicast may include broadcast and is therefore a broader term than broadcast as used herein. Data/content is transmitted in packets or frames. In order to provide data service over existing coaxial cable TV system (CATV), at least one implementation deploys a time division function (TDF) protocol compliant access point (AP) and stations (STAs) in the cable access network. The AP and STAs are connected via couplers in the hierarchical tree structure. In this way, a user at home can access the remote internet protocol (IP) core network via the cable access network. Access to the IP core by the user opens up services such as, but not limited to, Internet access, digital telephone access (e.g. voice over internet protocol), and cable television programming. An example network architecture 100 is illustrated in Figure 1.

Figure 1 depicts one embodiment of a network that accesses an IP core 105. The IP core may be any digital network that uses an Internet Protocol or equivalent digital data transfer protocol. In the example embodiment of Figure 1, a time division function (TDF) protocol compliant access point (AP) 110 has a network interface 116, such as wired LAN or optical interface, in connection with the IP core network 105, and a cable interface 112 in connection with a cable access network. Many such access points may be connected to the IP core network. The cable access interface 112 of AP 110 may be any form of cable such as optical fiber, coaxial, or other physically connected communications medium. As a result, the cable network may include any form of cable such as optical fiber, coaxial, or other physically connected communications medium. The cable network can include a signal coupler 115, if required, and distribution mediums such as interconnecting cables 117 and 119. Although only two such distribution cables are shown in Figure 1, it is understood that a multiplicity of such distribution connections are possible.

In the example of Figure 1, the distribution cables 117 and 119 connect to TDF protocol compliant stations (STAs) 120, 140 via cable interfaces 122 and 142 respectively. STA cable interfaces 122 and 142 may also access any form cable such as optical fiber, coaxial, or other physically connected communications medium. STAs 120 and 140 are TDF compliant and act as user-terminals which can connect with the cable access network with a multiplicity of interfaces for a user. Those interfaces include, but are not limited to both a conventional physical local area network (LAN) and a wireless local area network (WLAN). One example LAN is an Ethernet compliant network. One example wireless network is an IEEE 802.11 compatible wireless network.

Figure 1 depicts a station 1 modem 120 and station N modem 140 as having similar interfaces. However, this representation is merely exemplary because stations of different capabilities may be attached to the cable network provided the stations are communicatively compliant with the AP 110. For example, a station modem may have all of the user interfaces shown in Figure 1 or only a selected subset. In Figure 1, station 1 is configured to support a LAN interface 124 driving LAN connection 121 to a physical wired LAN 130 having stubs 130a, 130b, and 130c. The stubs support LAN compliant devices such as a set top box 132 for television and other services, a personal computer (PC) 134 for network services, such as Internet service, and other LAN compliant devices 136 which may include devices that support any type of digital service that provides multimedia services such as video, audio, telephony, and data. Such LAN compliant devices 136 include but are not limited to a fax, a printer, a digital telephone, a server, etc. Figure 1 depicts station 120 as also providing wireless services via WLAN radio frequency (RF) port 126 to drive antenna 125. The resulting wireless transmissions 123 can be used by a WLAN compliant device 138 to provide services to a user that include any of multimedia voice, audio, telephony, and data. Although only one wireless device 138 is shown, a multiplicity of such wireless devices may be used. Likewise, Station N also includes LAN interface 144 to drive LAN connection 141 for physical LAN 150 having stubs 150a, 150b, and 150c. Such stubs support communications with such LAN compatible devices such as set top box 152, PC 154, and other devices 156. WLAN RF port 146 supports antenna 145 providing link 143 for communication with WLAN device 158. It is understood by those of skill in the art that appropriate interface drivers exist for each of the network interface 116, cable interfaces 112, 122, 142, wired LAN interfaces 124, 144, and WLAN RF interfaces 126, 146 in Figure 1.

In one embodiment of the network 100, both TDF compliant APs and STAs implement a protocol stack separately in a logically linked control sublayer, MAC sublayer and physical layer, according to IEEE 802.11 series specifications. However, in the MAC sublayer, the TDF APs and STAs replace the IEEE 802.11 frame transmission entity with TDF frame/message/signal transmission entity. So, the MAC sublayer for TDF APs and STAs includes an IEEE 802.11 frame encapsulation/decapsulation entity and TDF frame transmission entity, while the MAC sublayer for IEEE 802.11 compliant APs and STAs includes IEEE 802.11 compliant frame encapsulation/decapsulation entity and an IEEE 802.11 frame transmission entity. For an integrated AP and STA, the TDF frame transmission entity and IEEE 802.11 frame transmission entity may co-exist at the same time, to provide both IEEE 802.11 and TDF functionality. The switch between the two modes can be realized by manual or dynamic configuration.

TDF Protocol Introduction

The AP 110 and the STAs 120 and 140 of Figure 1 utilize a TDF protocol to communicate on the cable medium. In one embodiment of the TDF protocol, IEEE 802.11 frames are transmitted via the cable media instead of over the air. The purpose of utilizing the IEEE 802.11 mechanism is to make use of the mature hardware and software implementation of IEEE 802.11 protocol stacks. Thus, TDF, using IEEE 802.11 frames, is used in the cable network of Figure 1 as the communication standard between an AP and its associated STAs.

One feature of TDF is its unique medium access control method for transmitting IEEE 802.11 data frames. In one embodiment, TDF does not utilize the conventional IEEE 802.11 DCF (distributed coordination function) or PCF (point coordination function) mechanism to exchange MAC frames, which include MSDU (MAC service data unit) and MMPDU (MAC management protocol data unit). Instead, TDF uses a time division access method to transmit MAC frames/messages/signals. So the TDF is an access method which defines a detailed implementation of a frame transmission entity located in MAC sublayer.

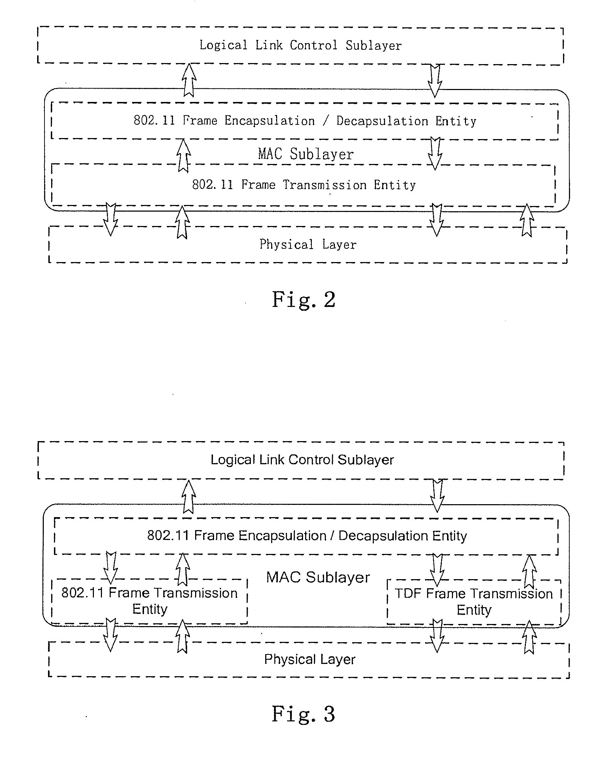

Figure 2 illustrates the standard IEEE 802.11 MAC sublayer protocol in the open system interconnection (OSI) reference model. In comparison, Figure 3 illustrates details of the frame transmission entities for the TDF protocol in the OSI reference model.

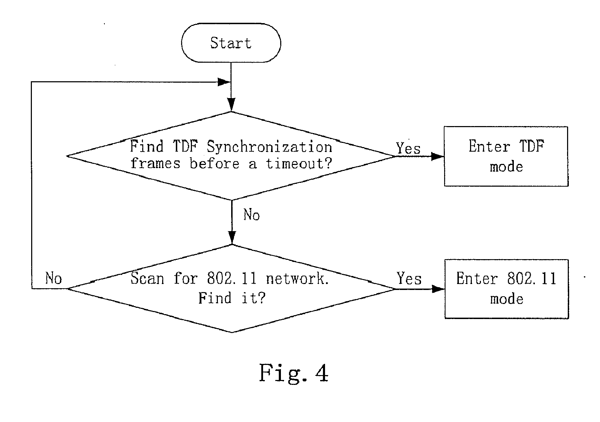

In one embodiment, stations, such as STA 120 and STA 140, operate in two communication modes. One mode is the standard IEEE 802.11 operation mode which obeys the frame structure and transmission mechanism defined in IEEE 802.11 series standard. The other mode is the TDF operation mode. In one embodiment, the determination of which operation mode to enter when a STA is started is indicated in Figure 4. Once a STA receives a synchronization frame/message/signal from an AP, the STA enters into TDF mode. If there is no synchronization frame received within a preset timeout, then the STA remains or shifts into IEEE 802.11 mode. Other mode determinations are presented herein.

TDF Protocol Functional Descriptions:

Access Method

The physical layer in a TDF station may have multiple data transfer rate capabilities that allow implementations to perform dynamic rate switching with the objective of improving performance and device maintenance. In one embodiment, a station may support at least three types of data rates: 54 Mbps, 18 Mbps and 6 Mbps. Data service may be provided mainly at a 54 Mbps data rate. If there are problems for a STA to support 54 Mbps data transmission, the STA may temporarily switch to 18 Mbps data rate. The 6 Mbps data rate operation mode is designed for the purpose of network maintenance and station debugging.

The data rate may be configured statically before a TDF station enters the TDF communication procedure, and remain the same during the whole communication process. On the other hand, the TDF station may also support dynamic data rate switching during the service. The criteria for the data rate switching may be based on the channel signal quality and other factors.

The fundamental access method of the TDF protocol is time division multiple access (TDMA), which allows multiple users to share the same channel by dividing it into multiple different timeslots. The STAs transmit in rapid succession for uplink traffic, one after the other, each using their own timeslot within a TDF superframe assigned by the AP. For downlink traffic, the STAs share the channel, and select the data frames/messages/signals or management frames/messages/signals targeted to them by comparing the destination address information in the frames with their address. Downlink traffic is defined as the transport of data from an AP to a STA. Examples of downlink traffic include requested digital data/content, such as audio or video requested by a user. Downlink data can be either unicast, broadcast, or multicast. Uplink traffic is defined as the transport of data from a STA to the AP. Examples of uplink traffic include a user request for digital data/content or commands to the AP to perform some function. Uplink data is generally unicast.

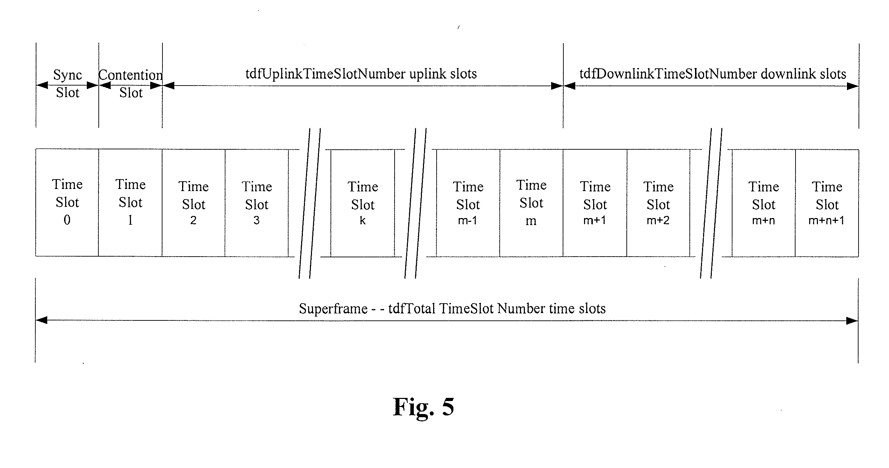

Figure 5 illustrates an example of a TDF superframe structure and the timeslot allocations for a typical TDF superframe when there are m STAs. As shown in Figure 5, there is a fixed number of timeslots tdfTotalTimeSlotNumber per TDF superframe, which includes one synchronization timeslot used to send clock synchronization information from an AP to one or more STAs, one contention timeslot used to send registration request for uplink timeslot allocation, multiple tdfUplinkTimeSlotNumber uplink timeslots used by the registered STAs to send data and some management frames to an AP one after another, and multiple tdfDownlinkTimeSlotNumber downlink timeslots used by the AP to transmit data and registration response management frames to the STAs. Except for the synchronization timeslot, all other timeslots, which are denoted common timeslots, have the same duration whose length equals the tdfCommonTimeSlotDuration. The value of tdfCommonTimeSlotDuration is defined to allow the transmission of at least one largest IEEE 802.11 PLCP (physical layer convergence protocol) protocol data unit (PPDU) in one normal timeslot for the highest data rate mode. The duration of synchronization timeslot, tdfSyncTimeSlotDuration, is shorter than that of the common timeslots, because the clock synchronization frame, which is transmitted from an AP to a STA in this timeslot, is shorter than an IEEE 802.11 data frame. The TDF superframe of Figure 5 is an example of a format where the slot fields are ordered as sync slot, contention slot, uplink slots, and downlink slots. Other orderings of the slot fields are possible provided that the sync slot occurs first in the superframe. For example, following orderings are also possible; (i) sync slot, downlink slots, uplink field, contention slot, (ii) sync slot, uplink slots, downlink slots, contention slot, and (iii) sync slot, contention slot, downlink slots, uplink slots.

As a result, the duration of one TDF superframe, defined as tdfSuperframeDuration, can be calculated by :

$$tdfSuperframeDuration = tdfSyncTimeSlotDuration + tdfCommonTimeSlotDuration * (tdfTotalTimeSlotNumber - 1)$$

The relationship between tdfTotalTimeSlotNumber, tdfUplinkTimeSlotNumber and tdfDownlinkTimeSlotNumber satisfies the following equality:

$$tdfTotalTimeSlotNumber = tdfUplinkTimeSlotNumber + tdfDownlinkTimeSlotNumber + 2$$

Furthermore, the number of allocated uplink timeslots for the TDF STAs in a TDF superframe may change from one to tdfUplinkTimeSlotThreshold. Accordingly, the available downlink timeslots in a TDF superframe may change from (tdfTotalTimeSlotNumber-2) to (tdfTotalTimeSlotNumber-2-tdfMaximumUplinkTimeSlotNumber). When there is one STA which asks for an uplink timeslot, the AP deducts one or more timeslots from the available pool of downlink timeslots, and then allocate these timeslots to the STA, as long as the uplink timeslots number do not exceed tdfMaximumUplinkTimeSlotNumber following the allocation. The value of tdfMaximumUplinkTimeSlotNumber may vary in different implementations. But the maximum uplink slot number should be carefully chosen so that there is at least one downlink timeslot available for an associated STA in order to guarantee the quality of service (QoS) of the data service. Furthermore, all successive timeslots that are used by the same STA or AP for same direction transmission can be merged to send MAC frames continuously to avoid wasted time at the edge of these timeslots caused by the unnecessary conversion and guarding.

In one implementation, the tdfCommonTimeSlotDuration is about 300 us, which is enough for the STA to transmit at least one largest IEEE 802.11 PPDU in one common timeslot for 54 Mbps mode. There are total 62 timeslots per TDF superframe. In these timeslots, there are 20 uplink timeslots and 40 downlink timeslots. When there are 20 STAs, each STA can be guaranteed that it has access to 680 kbps of uplink data rate and shares 30 Mbps (40 continuous timeslots) of downlink data rate. When there are 30 STAs, each STA can be guaranteed that it has access to 680 kbps of uplink data rate and shares 22.5 Mbps (30 continuous timeslots) of downlink data rate. The tdfMaximumUplinkTimeSlotNumber is 30. Finally, the value of tdfSuperframeDuration, which is the total duration of 61 common timeslots and one synchronization timeslot, is about 18.6 ms and it can be defined to different value for different usage. For example, if there is only one STA, it can be guaranteed that it has 4 timeslots to achieve about 18 Mbps of uplink data rate and own 18 Mbps (4 continuous timeslots) of downlink data rate. In this way, the value of tdfSuperframeDuration, which is the total duration of nine data timeslots and one synchronization timeslot, is about 4 ms.

Frame/Message/Signal Formats

In the IEEE 802.11 specification, three major frame types exist; data frames/messages/signals, control frames/messages/signals, and management frames/message/signals. Data frames are used to exchange data from an access point to a station and vice-versa. Several different kinds of data frames exist, depending on the network. Control frames are used in conjunction with data frames to perform area clearing operations, channel acquisition and carrier-sensing maintenance functions, and positive acknowledgement of received data. Control and data frames work in conjunction to deliver data reliably between access points and stations. More specifically, one important feature in exchanging frames is that there is an acknowledgement mechanism, and accordingly an acknowledgement (ACK) frame for every downlink unicast frame. This exists in order to reduce the possibility of data loss caused by an unreliable wireless channel. Management frames perform supervisory functions. They are used to join and leave wireless networks and move associations from access point to access point. As used herein, the term "frames" may also be referred to as messages or signals in all cases. Equivalently, the term "frames/messages/signals" may also be used to denote equivalents.

In one embodiment of the TDF system, STAs passively wait for a synchronization frame/message/signal from the AP to identify a controlling AP. The synchronization frame is a frame of data located within the sync slot (time slot 0) of Figure 5. Since STAs wait for the AP to send a synchronization frame, there is no need for the typical probe request and probe response frames found in wireless implementations of the IEEE 802.11 standard. But, acknowledgement (ACK) frames/messages/signals are used to ensure the reliability of data frame delivery.

In the TDF protocol, only some of the useful IEEE 802.11 MSDU and MMPDU types for data are used in a cable medium. For example, the data subtype in data frame types is used to encapsulate the upper layer data and transmit it between access points and stations. New management frames are needed to accommodate a clock synchronization requirement in TDF system. To realize the functionality of uplink timeslot requests, allocations, and releases, four new kinds of management frames are defined. Table 1 defines the valid combinations of type and subtype of the added frames/messages/signals in the TDF protocol.

Table 1 New Management Frames for TDF Protocol

| Type description | Subtype description |
| --- | --- |
| Management | Synchronization |
| Management | Registration request |
| Management | Registration response |
| Management | Unregistration request |
| Management | Alive notification |

Access Point (AP) Searching and Clock Synchronization

The TDF protocol provides a distribution of timing information to all the STA nodes. A STA listens to a synchronization frame/message/signal in the sync slot of the Figure 5 superframe to decide if there is an active AP available. Once the STA enters TDF communications, the STA uses the synchronization frame to adjust its local timer, based on which the STA decides if it is its turn to send uplink frames. At any given time, the AP is the master and the STA is a slave in the synchronization procedure. If the STA has not received a synchronization frame from the associated AP for a predefined threshold period, which is defined as tdfSynchronizationCycle, the STA reacts as if the associated AP has stopped servicing the STA. In this instance, the STA stops communicating with the stopped AP and starts to look for an active AP by listening for the synchronization frame again.

In the TDF system, all STAs associated with the same AP synchronize to a common clock. The AP periodically transmits special frames called synchronization frames that contain the AP clock information to synchronize the STAs in its local network. In one embodiment, synchronization frames are generated for transmission by the AP once every TDF superframe time and sent in the sync timeslot of the TDF superframe.

Every STA maintains a local timing synchronization function (TSF) timer to ensure it is synchronized with the associated AP. After receiving a synchronization frame, a STA always accepts the timing information in the frame. If the STA TSF timer is different from the timestamp in the received synchronization frame from the AP, then the receiving STA sets its local timer according to the received timestamp value. Further, the STA may add a small offset to the received timing value to account for local processing by the transceiver.

STA Registration with an AP

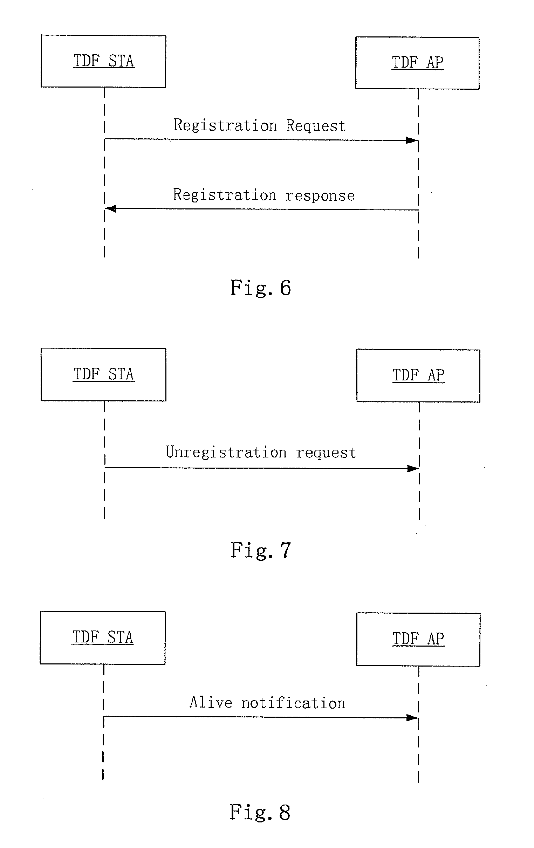

Figure 6 illustratively describes the procedure of registration. Once a STA has acquired timer synchronization information from the synchronization frame, the STA learns when timeslot 0 occurs. If a STA is not associated with any active AP, the STA tries to register with an AP which sent a synchronization frame. The STA associates with an AP by sending Registration request frames to the AP during the contention timeslot, which is the second timeslot in a TDF superframe of Figure 5. In one embodiment, the duration of the contention timeslot, which equals the tdfCommonTimeSlotDuration, and the registration request frame/message/signal structure are designed to allow for sending at least tdfMaximumUplinkTimeSlotNumber Registration request frames in one contention timeslot. Based on the design, the contention timeslot is divided into tdfMaximumUplinkTimeSlotNumber equal length sub-timeslots.

As soon as an STA detects an active, targeted AP, the STA chooses one sub-timeslot in the contention timeslot to send registration request frame to the AP. The purpose of this action is to reduce the chance of collision when there are many STAs starting at the same time and trying to register with the same AP simultaneously. A registration request may occur according to the following method:

A. Upon allocation of an uplink timeslot, a STA stores the allocated uplink timeslot number, defined as tdfAllocatedUplinkTimeSlot. The allocated uplink timeslot indicates the timeslots location in the whole pool of uplink timeslots and ranges from 1 to tdfMaximumUplinkTimeSlotNumber.
B. The AP allocates the same uplink timeslot to the same STA every time the STA requests an uplink timeslot.
C. When it is time to select a timeslot in which to send a registration request frame, if there is a stored tdfAllocatedUplinkTimeSlot value, the STA sets the timeslot number to tdfAllocatedUplinkTimeSlot. If there is no such value, the STA randomly chooses one sub-timeslot in the tdfMaximumUplinkTimeSlotNumber available timeslots. The STA then sends the registration request frame to the AP in the randomly chosen timeslot.

The STA lists all data rates it supports at that time and also sends some information such as the received signal carrier/noise ratio in the registration request frame. The STA may send several successive registration request frames with different supported data rates. After sending out the frame, the STA listens for the registration response frames/messages/signals from the AP.

After receiving a registration request frame from a STA, based on the following method, the AP sends different kinds of registration response frames back to the STA in the downlink timeslots.

A. If the already allocated uplink timeslots equal tdfMaximumUplinkTimeSlotNumber, the AP puts an uplinkTimeSlotUnavailable indicator in the frame body.
B. If the AP does not support any data rates listed in the supportedDataratesSet in the registration request management frame, the AP puts an unsupportedDatarates indicator in the frame body.
C. If there are uplink timeslots available to allocate and common data rates that both the AP and STA support, the AP allocates one uplink timeslot and chooses a suitable common data rate according to information such as carrier/noise ratio in the STA's registration request frame, and then sends a registration response frame to the STA. The frame/message/signal body contains the allocated uplink timeslot and the chosen data rate information. After a successful registration process, the TDF STA and TDF AP reach an agreement on which uplink timeslot and data rate to use.

Fragmentation/defragmentation

In TDF protocol, the timeslot duration for the transmission of MSDU is fixed as tdfCommonTimeSiotDuration. For some data rates, when the MSDU's length is more than a threshold, it is impossible to transmit it in a single timeslot. So when a data frame for uplink transmission is longer than the threshold, which is defined as tdfFragmentationThreshold and varies depending on different data rates, the data frame is fragmented before transmission. The length of a fragment frame is an equal number of octets (tdfFragmentationThreshold octets), for all fragments except the last, which may be smaller. After fragmentation, the fragmented frames are put into the outgoing queue for transmission to the AP. This fragmentation procedure may run in the TDF frame transmission entity or in the upper layer by using the tdfFragmentationThreshold dynamically set in the TDF frame transmission entity.

At the AP end, each fragment received contains information to allow the complete frame to be reassembled from its constituent fragments. The header of each fragment contains the following information that is used by the AP to reassemble the frame:

A. Frame type
B. Address of the sender, obtained from the Address 2 field
C. Destination address
D. Sequence control field: This field allows the AP to check that all incoming fragments belong to the same MSDU, and the sequence in which the fragments should be reassembled. The sequence number within the sequence control field remains the same for all fragments of a MSDU, while the fragment number within the sequence control field increments for each fragment.
E. More fragments indicator: Indicates to AP that this is not the last fragment of the data frame. Only the last or sole fragment of the MSDU has this bit set to zero. All other fragments of the MSDU shall have this bit set to one.

The AP reconstructs the MSDU by combining the fragments in the order of fragment number subfield of the sequence control field. If the fragment with the more fragments bit set to zero has not yet been received, the AP knows that the frame is not yet complete. As soon as the AP receives the fragment with the more fragments bit set to zero, it knows that no more fragments may be received for the frame. The AP can issue retransmission requests to the STA if a received fragment contains errors or is incomplete.

The AP maintains a receive timer for each frame being received. There is also an attribute, tdfMaxReceiveLifetime, which specifies the maximum amount of time allowed to receive a frame. The receive timer starts upon the reception of the first fragment of the MSDU. If the receive frame timer exceeds tdfMaxReceiveLifetime, then all received fragments of this MSDU are discarded by the AP. If additional fragments of a directed MSDU are received after its tdfMaxReceiveLifetime is exceeded, those fragments are discarded.

Uplink Transmission

As stated above, uplink is defined as the transfer of information from a STA to an AP. After receiving the registration response frame from the AP, the STA analyzes the frame body to see if it is granted an uplink timeslot. If not, it pauses and applies for the uplink timeslot later. If granted, the STA starts to transmit uplink traffic during the assigned timeslot using the data rate indicated in the registration response frame.

At the beginning of the uplink transmission during the assigned timeslot, the STA sends the first frame in its outgoing queue (buffer) to the AP if there is at least one outgoing frame in the queue (buffer). After that, the STA checks the second uplink frame's length and evaluate if it is possible to send it during the remaining duration in the assigned timeslot. If not, it stops the uplink transmission procedure and waits to send it in the assigned timeslot during the next TDF superframe. If yes, the STA immediately sends the second frame to the destination AP. The sending procedure continues to run in this way until the assigned timeslot has ended, or until there are no more uplink frames to transmit.

Downlink Transmission

As stated above, downlink is defined as the transfer of information from an AP to a STA. In the entire TDF communication procedure, the total number of downlink timeslots may change dynamically due to the changing number of associated STAs. When the AP prepares to send frames to the associated STAs, it compares the time left in the remaining downlink timeslots with the duration needed for transmitting the specific downlink frame using the agreed data rate. Then, based on the result, it decides if the frame should be transmitted with the specific data rate during this TDF superframe. Furthermore, the AP does not need to fragment downlink frames.

When it is not time for the associated STA to send uplink traffic, the STA listens to the channel for the possible downlink frames addressed to it.

Unregistration

As shown in Figure 7, if the STA decides to go off-line and stop TDF communications, the STA sends an unregistration request frame to the associated AP during its uplink timeslot, in order to inform the AP to release the allocated uplink timeslot resource. After receiving the unregistration request frame, the AP releases the uplink timeslot assigned for the STA and puts it into a free timeslot pool for future use. The released timeslot may be used in either an uplink timeslot period or in a downlink timeslot period depending on system needs.

Alive Notification

Referring to Figure 8, the STA reports its aliveness by sending an alive notification frame periodically to AP during its uplink timeslot period. This is performed to allow the AP to sense if a STA unexpectedly crashes or shuts down so that the AP can release the AP resources as soon as possible. If there is no alive notification frame for a predefined threshold period which is denoted tdfAliveNotificationCycle, the associated AP acts as if the STA is offline, and then releases the uplink timeslot allocated for the STA. This result is similar to receiving an unregistration request frame from the STA wherein a once-allocated timeslot is returned to the pool of available time slots for future use.

In one embodiment, in order to ensure coexistence and interoperability on multirate-capable STAs, a set of rules is followed by all STAs:

A. The synchronization frames are transmitted at the lowest rate in the TDF basic rate set so that they are understood by all STAs.

B. All frames with destination unicast addresses are sent using the supported data rate selected by the registration mechanism. No station transmits a unicast frame at a rate that is not supported by the receiver station.

C. All frames with destination multicast address are transmitted at the highest rate in the TDF basic rate set.

Packet/Frame Transfer Operation Example

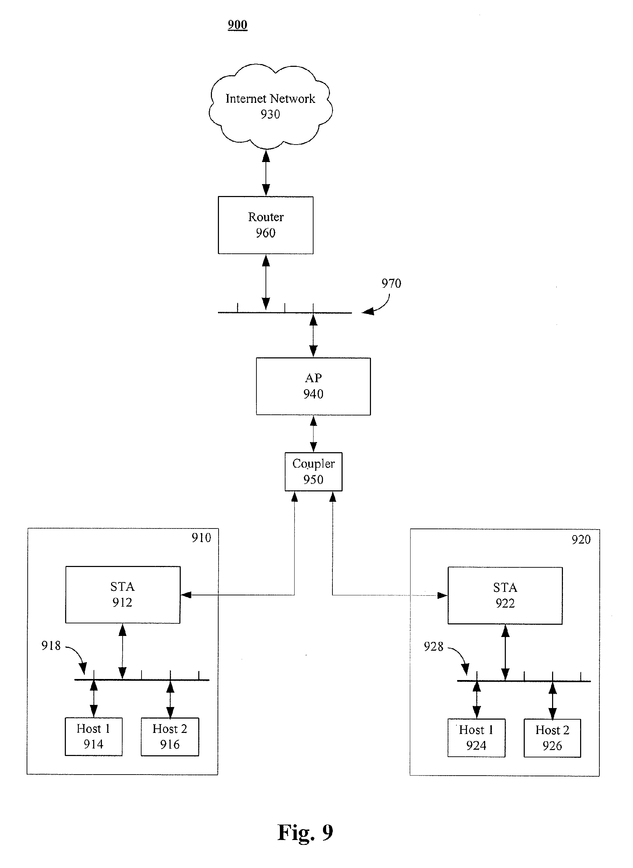

A description of Figures 9-20 follows to further describe the operational flow of information in the system described by Figures 1-8. Of course, the features and aspects of the implementations of Figures 9-20 may be used with other systems. As described above, a TDF protocol can replace the conventional IEEE 802.11 compatible DCF (distributed coordination function) or PCF (point coordination function) mechanism.

Referring to Figure 9, a typical TDF network example 900 is shown. The network 900 provides a connection from user homes 910 and 920 to the Internet (or another resource or network) 930. The user homes 910 and 920 connect through an access point (AP) 940 over a cable system coupler 950. The AP 940 may be located, for example, in a neighborhood of the homes 910 and 920, or in an apartment building that includes the homes (apartments, for example) 910 and 920. The AP 940 may be owned by a cable operator, for example. The AP 940 is further coupled to a router 960 over a LAN system 970. The router 960 is also coupled to the Internet 930.

As should be clear, the term "coupled" refers to both direct connections (no intervening components or units) and indirect connections (one or more intervening components and/or units, such as splitters, amplifiers, repeaters, interface converters, etc.). Such connections may be, for example, wired or wireless, and permanent or transient.

The user homes 910 and 920 may have a variety of different configurations, and each home may be differently configured. As shown in the network 900, however, the user homes 910 and 920 each include a station (referred to as a modem or STA) 912 and 922, respectively. The modems 912, 922 are coupled to a first host (host1) 914, 924, and a second host (host2) 916, 926, over an LAN network 918, 928, respectively. Each host 914, 916, 924, and 926 may be, for example, a computer or other processing device or communication device. There are various ways in which the network 900 may allow multiple hosts (for example, 914, 916, 924, and 926) to connect to the router 960. Four implementations are discussed below, considering only the modem 912 and hosts 914 and 916, for simplicity.

In a first method, the modem 912 acts as another router. The hosts 914 and 916 are identified by their IP addresses, and the modem 912 routes IP packets from the hosts 914 and 916 to the router 960. This method typically requires the modem 912 to run router software, which requires additional memory and increased processing power.

In a second method, the modem 912 acts as a bridge. The modem 912 and the AP 940 use the standard wireless distribution system (WDS) mechanism to convey layer 2 packets to the router 960. The hosts 914 and 916 are identified by their media access control (MAC) addresses. This method is part of the IEEE 802.11 standard and can serve multiple hosts simultaneously. However, not all APs and modems support WDS with enhanced security.

In a third method, the modem 912 uses MAC masquerade to change the source MAC address of LAN packets/frames (the source being one of the hosts 914 and 916) to its own MAC address. So from the point of view of the router 960, the router 960 only sees the modem 912. The modem 912 can only serve one host at one time with this method.

In a fourth method, the modem 912 uses encapsulation, as described in further detail below. Each of the above methods has advantages and disadvantages, and these advantages and disadvantages may vary depending on the implementation. However, the encapsulation method provides particular advantages in that it generally allows the modem to be simpler by not requiring that the modem run router software. Also, the encapsulation method does not typically introduce security problems and it can serve multiple hosts at one time.

Additionally, the encapsulation method avoids the large overhead possibly associated with the first three methods, which transfer each packet from a host by using a single WLAN-formatted packet. In the present TDF environment, a WLAN-formatted packet is used as a convenient format for transferring information in the hardwire (non-RF) TDF cable system of Figure 9. Thus, the first three methods incur the overhead of the WLAN packet for every packet transferred from a host, and the throughput is correspondingly reduced. Such inefficiency is typically aggravated in the TDF environment. In the TDF environment, the duration of the timeslot is fixed, and the timeslot is designed to allow only one largest WLAN frame to transmit in one slot. Thus, only one host packet can be transmitted in each timeslot.

Accordingly, the encapsulation method can provide one or more of a variety of advantages. Such advantages include, for example, simpler router design and operation, increased security, serving multiple hosts, and increased efficiency and throughput. In an embodiment that includes the encapsulation method, multiple LAN packets are included into one WLAN-formatted packet (WLAN packet). The WLAN packet is as big as the maximum length allowed by the TDF timeslot. The entity that receives the encapsulated packets (for example, an AP) decapsulates the WLAN packet into individual LAN packets and send them to the router. For communication in the reverse direction, a modem (STA) decapsulates a WLAN packet and send the individual LAN packets to the host(s).

STA and AP Example

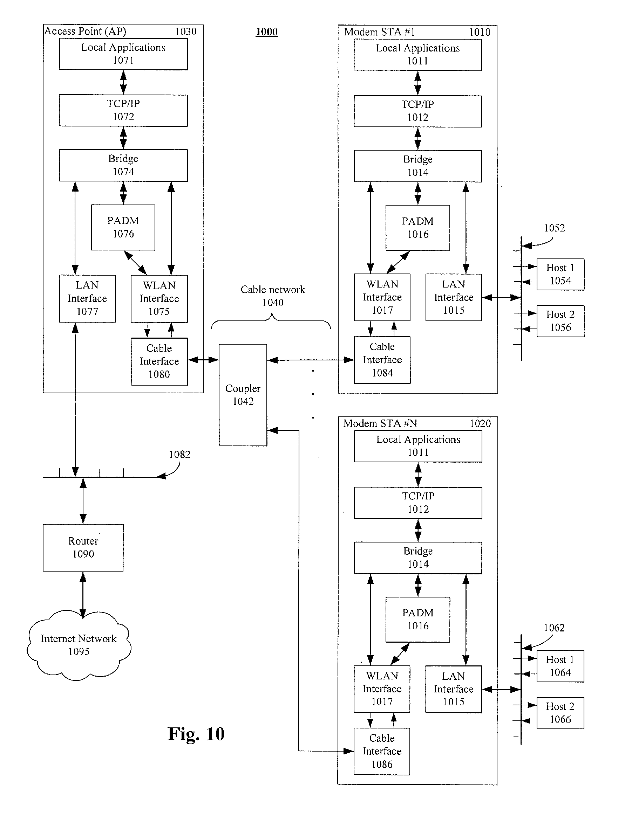

Figure 10 is an illustration 1000 that includes multiple modems (STAs), two of which are explicitly shown, and an AP. In the illustration, up to N modems may be connected to an AP via the cable network. The illustration includes a modem #1 1010, a modem #N 1020, and an AP 1030, with each of the modems 1010 and 1020 coupled to the AP 1030 over a cable network 1040 via coupler 1042. The cable network coupler 1042 may be a signal splitter, amplifier, repeater, or other type of coupler as is well known in the art for cable systems. Other implementations may use separate cable networks for each of the modems depending on alternate configurations of an interconnecting cable network. Modems #1 1010 and #N 1020 are shown as having local area network (LAN), such as Ethernet, Appletalk, or Arcnet, and cable drive interfaces for external use. This configuration is only an example of the types of interfaces that the modem may provide for a user.

Figure 10 depicts both functional and physical interfaces as described below. The modems 1010 and 1020, and the AP 1030 include functional components of the same name, although some of the external connections are different and the components themselves perform different functions for a modem and for an AP. Thus, a commonly depicted unit function can serve in both a modem and an AP. However, it should be clear that different units could be designed for a modem and for an AP, with the different units performing only those functions required of a modem or an AP, respectively.

It is also understood that the functions and interfaces shown in modems 1010, 1020, and 1030 may be implemented by hardware, firmware or software, or any combination of hardware, firmware, and software. For example, modem 1010 may include a processing unit (not shown) that provides fixed or programmable co-ordination of the functions and interfaces shown in Figure 10 and other figures. Those of skill in the art will recognize that a central processing unit, multiple processors, application specific integrated circuits, logic control circuits, analog drive circuits for the interfaces, and power supplies may be used in combination to realize the functionality of the devices of Figure 10 and the other figures presented herein.

The modem 1010 includes a local applications layer 1011, followed by a TCP/IP layer 1012, followed by a bridge 1014. The bridge 1014 is coupled to a LAN interface 1015, a packet aggregation/deaggregation module (PADM) 1016, and a WLAN format interface 1017. The PADM 1016 is also coupled to the WLAN format interface 1017. A cable interface 1084 couples the WLAN format interface 1017 to the external cable network 1040 between the modem 1010 and the AP 1030. The LAN interface 1015 is coupled to an LAN network 1052, that is coupled to a first host (host1) 1054 and a second host (host2) 1056.

The modem 1020 is analogous to the modem 1010. However, the modem 1020 is coupled to a LAN network 1062, and the LAN network 1062 is coupled to a first host (host1) 1064 and a second host (host2) 1066. The components of the modem 1020 are shown as being similar to those of the modem 1010. However, it should be clear that various configuration parameters, for example, are different when the modems 1010 and 1020 are set up and operational.

The AP 1030 includes a local applications layer 1071, followed by a TCP/IP layer 1072, followed by a bridge 1074. The bridge 1074 is coupled to an Ethernet interface 1077, a PADM 1076, and a WLAN format interface 1075. The PADM 1076 is also coupled to the WLAN format interface 1075. A cable interface 1084 couples the WLAN format interface 1075 to the external cable network 1040 between the AP 1030 and the downstream modems 1010 and 1020. The LAN interface 1077 is coupled to an Ethernet network 1082, which in turn is coupled to a router 1090. The WLAN format interfaces 1017 and 1075 are communicatively coupled to each other via cable interfaces 1084 and 1080 and the cable network 1040. The router 1090 is further coupled to the Internet 1095. Thus, a connection exists between the hosts 1054, 1056, 1064, 1066, and the Internet 1095.

The various local application layers (1011, 1071) are standard layers for running local applications and interfacing with other layers in the architecture. The various TCP/IP layers (1012, 1072) are standard layers for running TCP/IP and for providing the services typically provided by such layers, including interfacing to other layers in the architecture. The various LAN interfaces (1015, 1077) are standard units for interfacing to/from a LAN network. Such interfaces 1015, 1077 transmit and receive LAN packets and operate according to a protocol, such as an Ethernet protocol.

The various WLAN format interfaces (1017, 1075) are units for formatting frames used in communication across cable network 1040 via cable interfaces 1084 and 1080. Such WLAN format interfaces 1017, 1075 transmit and receive WLAN formatted packets and operate according to the WLAN protocol. However, the WLAN interfaces 1017, 1075 are actually coupled, in the illustration 1000, to a cable network 1040 via cable interfaces 1084 and 1080 rather than using wireless communication.

The LAN 1015, 1077, WLAN format interfaces 1017, 1075, and cable interfaces 1084, 1080 may be implemented, for example, in hardware such as plug-in cards for a computer. The interfaces may also largely be implemented in software such as a program that performs the functions of the formatting interface using instructions that are implemented by a processing device. Drivers for such software formatting functions would however be implemented in hardware for the LAN and cable interfaces. Overall, an interface generally includes a portion for receiving the actual signal (for example, a connector) and for buffering the received signal (for example, a transmit/receive buffer), and typically a portion for processing the signal (for example, all or part of a signal processing chip).

The various bridges (1014, 1074) are units that forward packets between an Ethernet interface and a WLAN formatting interface. A bridge may be software or hardware implemented, or may only be a logical entity. Standard implementations for a bridge, or any other function within an AP or STA, include a processing device (such as an integrated circuit, single or multiple processing units) or a set of instructions running on a processing device (such as a processor running bridge software).

The PADMs 1016 and 1076 perform a variety of functions, including packet encapsulation and decapsulation, which are further described below. The PADMs 1016 and 1076 may be implemented in, for example, software, hardware, firmware, or some combination thereof. Software implementations include, for example, a set of instructions such as a program for running on a processing device. Such instructions may be embodied in a computer-readable medium. Hardware implementations include, for example, a dedicated chip such as an application specific integrated circuit (ASIC) or a programmable device such as a programmable gate array (PGA) which may even include firmware instructions supporting digital logic elements.

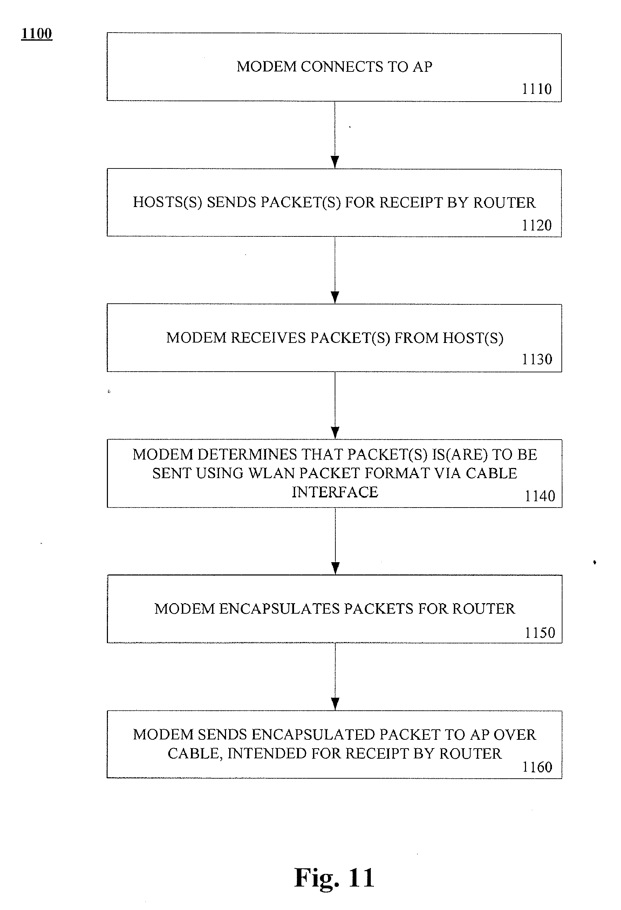

Referring to Figure 11, a process 1100 depicts a process for transferring frames/packets from a host to an AP via a modem or STA. The frames/packets are transmitted from the modem for receipt by an AP, and for eventual delivery to a router and then a final destination in an IP core network. This process 1100 is also referred to as a modem to AP uplink transmission process. The process 1100 includes the modem connecting to the AP (1110) using, for example, a registration process previously described. Such processes may also include, for example, standard WLAN protocols including authentication and association operations.

The process 1100 then includes one or more hosts sending one or more frames/packets (1120) to the modem, and the modem receiving the sent frames(s)/packet(s) (1130). Note that the sent frames/packets are for receipt by a router which delivers the frames/packets to the final destination(s). In the implementation of Figure 10, the modem 1010 receives the sent frames/packets, from one or more of the hosts 1054 and 1056, over the LAN network 1052 through the LAN interface 1015.

The modem then determines that the frame(s)/packet(s) is (are) to be sent via a WLAN formatting interface (1140) to the AP via the cable interface. The modem makes this determination (1140) by recognizing that the router is accessed using the cable interface and the WLAN format interface, as opposed, for example, to being accessed over another interface (such as a wireless interface, not shown). In the implementation of Figure 10, the modem 1010 sends the received frame(s)/packet(s) to the bridge 1014, and the bridge 1014 makes this determination (1140).

The modem then encapsulates multiple frames/packets for the router, including the one or more received frames/packets (1150). The encapsulation (1150) may include frames/packets received from multiple hosts, for example, from hosts 1054 and 1056 in the implementation of Figure 10. Further, the encapsulation may include the frame(s)/ packet(s) received in operation 1130 and frames/packets received earlier and stored in a queue.

In an implementation that does not encapsulate multiple frames/packets, the implementation may use a bridge to map LAN frames/packets to individual WLAN packets, encapsulating each LAN frame/packet individually. Such encapsulation may, for example, include the entire LAN packet as a data portion of a WLAN packet and add an additional WLAN header.

Further, implementations that do not encapsulate multiple frames/packets need not even encapsulate the individual LAN frames/packets. Rather, such implementations may transform individual LAN frames/packets into individual WLAN packets by, for example, replacing the LAN header with a WLAN header and by optionally adding one or more additional fields.

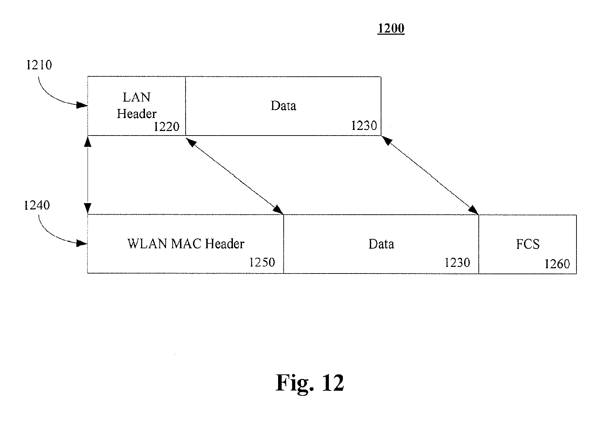

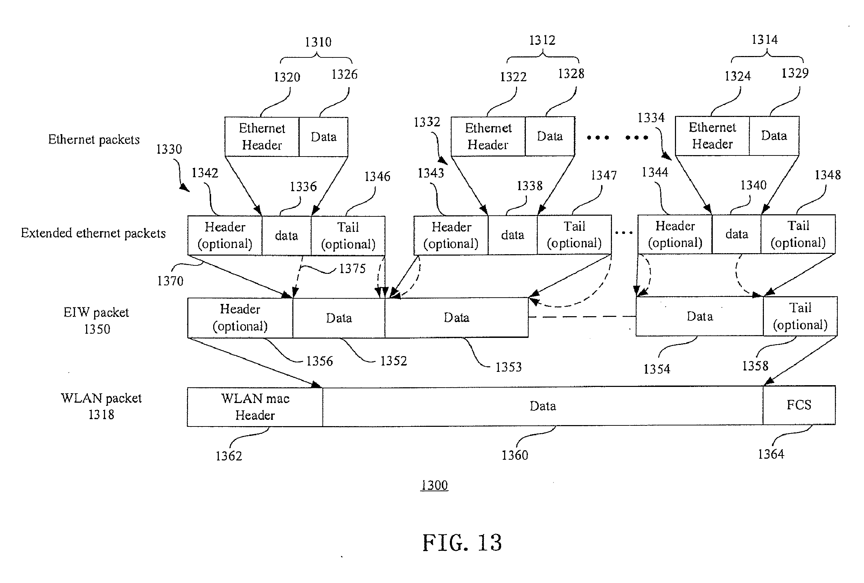

For example, referring to Figure 12, a transformation 1200 is shown that receives an LAN frames/packet 1210 including a LAN header 1220 and a data portion 1230. The transformation 1200 produces a WLAN packet 1240 that includes a WLAN header 1250, the data portion 1230, and a frame check sequence (FCS) 1260. However, implementing operation 1150 includes encapsulating multiple LAN frames/packets into a single WLAN packet. One implementation of operation 1150 is illustrated in Figure 13.

Figure 13 is depicts an example transformation from LAN frames/packets, depicted as specific Ethernet packets, to a WLAN packet. As noted before, an Ethernet packet is a specific form of a LAN frame/packet. Accordingly, Figure 13 is applicable to any type of LAN packet. In Figure 13, a transformation 1300 receives multiple Ethernet packets, including Ethernet packets 1310, 1312, and 1314, and produces a single WLAN packet 1318. The Ethernet packets 1310, 1312, and 1314 each include an Ethernet header 1320, 1322, and 1324, respectively, and a data portion 1326, 1328, and 1329, respectively. The Ethernet packets 1310, 1312, and 1314 may originate from the same host, or from different hosts. Further, although the Ethernet packets 1310, 1312, and 1314 are being encapsulated for sending to a router, the final destinations of the Ethernet packets 1310, 1312, and 1314 may be different. For example, each of the Ethernet packets 1310, 1312, and 1314 may be destined for different Internet sites with which the one or more hosts are communicating (or attempting to communicate). The transformation 1300 is shown as including two intermediate operations. However, other implementations do not perform any intermediate operations, and still other implementations perform more intermediate operations.

The first intermediate operation is transforming the Ethernet packets into extended Ethernet packets. The Ethernet packets 1310, 1312, and 1314 are transformed into extended Ethernet packets 1330, 1332, and 1334, respectively. In the transformation 1300, the entire Ethernet packets 1310, 1312, and 1314 are included as data portions 1336, 1338, and 1340, respectively, of the extended Ethernet packets 1330, 1332, and 1334. The extended Ethernet packets 1330, 1332, and 1334 also include, respectively, optional headers 1342, 1343, and 1344, as well as optional tails/trailers 1346, 1347, and 1348. The headers 1342, 1343, and 1344, and the tails/trailers 1346, 1347, and 1348 may include a variety of different pieces of information, whether typical for headers/tails/trailers or not, such as, for example, packets numbers, acknowledgment and retransmission information, addresses for sources and/or destinations, and error checking information.

The second intermediate operation includes transforming the extended Ethernet packets into a single "Ethernet in WLAN" (EIW) packet 1350. The EIW packet 1350 includes data portions for each of the extended Ethernet packets. Two possible transformations are shown. The first is illustrated by solid arrows 1370 and the second is illustrated by dashed arrows 1375.

As shown by the solid arrows 1370 in the transformation 1300, data portions 1352, 1353, and 1354 correspond, respectively, to the included extended Ethernet packets 1330, 1332, and 1334. The EIW packet 1350 further includes an optional header 1356 (also referred to as an EIW header) and an optional tail/trailer 1358, which may include, for example, any of the information previously described for headers/tails/trailers. If no header or tail/trailer is inserted into an extended Ethernet packet, then the data portion of the extended Ethernet packet (for example, the data portion 1336) becomes the data portion of the EIW packet (for example, the data portion 1352). Further, even if a header or tail/trailer is inserted into the extended Ethernet packet, an implementation may discard/ignore the header or tail/trailer when forming the EIW packet. In either of these cases, the data portions of the extended Ethernet packet are included in the EIW frame/packet.

As shown by the dashed arrows 1375 in the transformation 1300, the data portions 1352, 1353, and 1354 need not correspond, respectively, to the extended Ethernet packets 1330, 1332, and 1334. That is, a data portion of an EIW packet need not contain an entire extended Ethernet packet. As indicated by the dashed arrows 1375, an extended Ethernet packet may be divided into the data portions of two EIW packets.

More specifically, the implementation illustrated by the dashed arrows 1375 shows that (1) a second part of the extended Ethernet packet 1330 is put into the data portion 1352 of the EIW packet 1350, (2) the entire extended Ethernet packet 1332 is put into the data portion 1353 of the EIW packet 1350, and (3) a first part of the extended Ethernet packet 1334 is put into the data portion 1354 of the EIW packet 1350. Thus, in one scenario for the EIW packet 1350, (1) the first data portion 1352 contains a partial extended Ethernet packet, and (2) the last data portion 1354 contains a partial extended Ethernet packet, while (3) the middle data portions (1353 and any other data portions not explicitly shown) contain complete extended Ethernet packets. Although not shown, it should be clear that the first part of the extended Ethernet packet 1330 may be placed in a data portion of a previous EIW packet, and (2) a second part of the extended Ethernet packet 1334 may be placed in a data portion of a subsequent EIW packet.

In the final stage of the transformation 1300, the EIW packet 1350 is included as a data portion 1360 in the WLAN packet 1318. The WLAN packet 1318 also includes a WLAN MAC header 1362 and an FCS 1364. As should be clear, not all implementations use all of the optional headers and tails/trailers, nor even use all (or any) of the optional intermediate operations (also referred to as stages). For example, other implementations only copy part of the extended Ethernet packets into the EIW packet, in order to fit more original data (for example, data portions 1326, 1328, and 1329) into a fixed-duration timeslot. As should be clear, the determination of which headers and tails/trailers are used, as well as how many intermediate operations are included may vary for each implementation based on design goals and constraints.

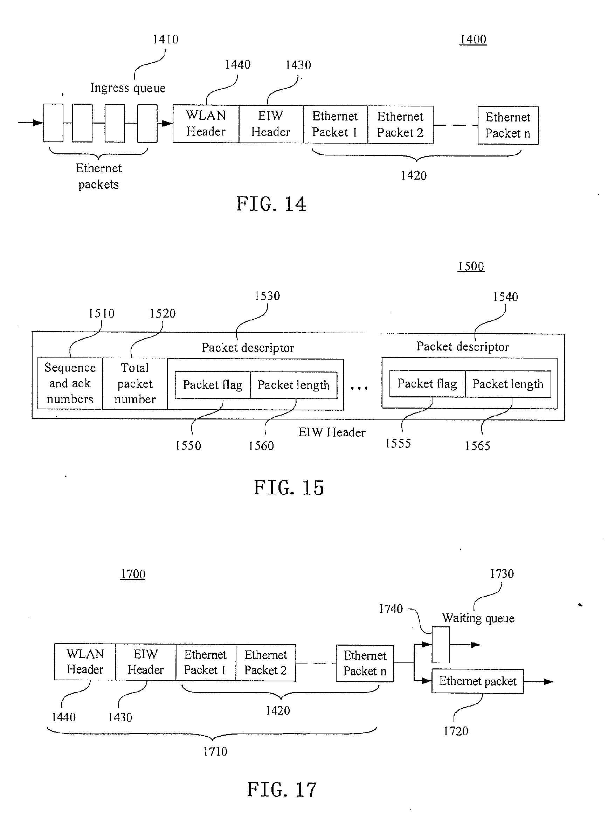

As with Figure 13, Figure 14 utilizes the specific example of an Ethernet packet as a LAN frame/packet. Non-Ethernet packets could also be used. Referring to Figure 14, a diagram 1400 shows how one implementation of a PADM encapsulates Ethernet packets. The PADM maintains an ingress queue 1410 into which each incoming Ethernet packet is placed. The PADM concatenates the Ethernet packets into a string 1420, and adds an EIW header 1430 and a WLAN header 1440. Depending on the information included in the headers 1430 and 1440, these headers 1430 and 1440 may be constructed ahead of time or after concatenating the Ethernet packets. For example, at least one implementation includes in the EIW header 1430 a number representing the number of Ethernet packets in the string 1420. Given that Ethernet packets may have a variable length, this number is not typically available until after the Ethernet packets have been assembled into the string 1420. As should be clear, the headers 1430 and 1440 may be defined to accommodate the needs of a particular implementation.

Referring to Figure 15, a format 1500 of one implementation of an EIW header is shown. The format 1500 includes a field 1510 for sequence and ack numbers, a total packet number 1520, and a series of packet descriptors, including one descriptor for each Ethernet packet encapsulated in the WLAN packet. Accordingly, a variable number of packet descriptors are envisioned, as indicated by the ellipsis in Figure 15. Packet descriptors 1530 and 1540 are shown, with each of the packet descriptors 1530 and 1540 including a packet flag (1550 and 1555, respectively) and a packet length (1560 and 1565, respectively).

The sequence number (1510) provides a sequence identifier for the encapsulated data, which allows the recipient to acknowledge receipt of the transmission. The ack number provides an acknowledgement for previously received data. The total packet number is the number of Ethernet packets that are encapsulated in the WLAN packet.

The packet flags (1550, 1555) indicate whether the associated Ethernet packet is a complete packet. Given that the timeslot has a fixed duration, it is possible that an entire Ethernet packet might not fit into a given WLAN packet. Accordingly, in particular implementations it is expected that the last Ethernet packet may typically be shorter in any given WLAN packet. The packet length (1560, 1565) indicates the length of that particular Ethernet packet.

Continuing with the process 1100 of Figure 11, using the implementation of Figure 10, the operation 1150 may be performed by, for example, the PADM 1016 of the modem 1010. Other implementations may perform the operation 1150 in, for example, the bridge, the LAN interface, the WLAN format interface, another intermediary component other than the PADM, a component above the bridge, or in a combination of components. As should be clear, the component(s) performing the operation 1150 may be implemented in, for example, software (such as a program of instructions), hardware (such as an IC), firmware (such as firmware embedded in a processing device), or a combination. Additionally, the PADM may be located in a different position within the modem (such as, for example, above the bridge or between the Ethernet interface and the bridge), within one of the interfaces or the bridge, and/or be distributed among multiple components.

The process 1100 further includes the modem sending the encapsulated packet to the AP over a cable network (1160). The sent packet is intended for receipt by the router. The cable network may include, for example, a coaxial cable, a fiber optic cable, or other wired transmission medium as well as couplers, splitters, amplifiers, repeaters, interface converters, and the like as needed for reliable distribution of information packets.

In one embodiment, when a modem's uplink timeslot arrives, the modem gathers packets from the ingress queue and puts them into one WLAN packet. The WLAN packet may not be bigger than the biggest packet that the timeslot allows. Conversely, when the timeslot arrives, if the WLAN packet is not big enough to fill the duration of the fixed timeslot, then one implementation still sends the (smaller) WLAN packet, whereas another implementation sends NULL data.

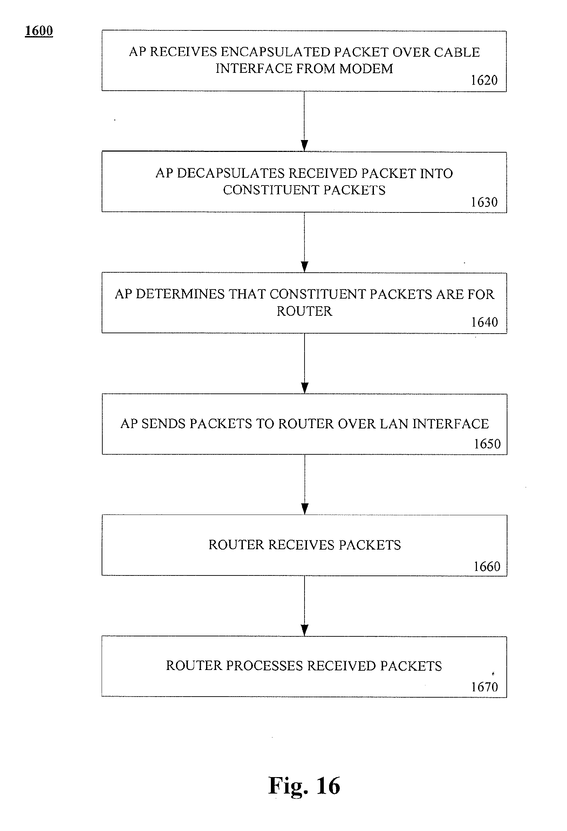

Referring to Figure 16, a process 1600 depicts a process for receiving encapsulated frames/packets, decapsulating the packets, and delivering the constituent frames/packets. This process 1600 is also referred to as an AP to IP Core uplink process. The process 1600 includes an AP receiving an encapsulated packet from a modem over a cable interface (1620). In the implementation of Figure 10, the AP 1030 receives the encapsulated frames/packet from the modem 1010. At the AP, the packet is received via the cable interface 1080 and is sent to the WLAN format interface 1075.

The AP decapsulates the received packet to extract the constituent packets that make up the encapsulated packet (1630). In the implementation of Figure 10, the WLAN format interface 1075 sends the received (encapsulated) packet to the PADM 1076. The PADM 1076 performs decapsulation and provides the constituent frames/ packets to the bridge 1074. Decapsulation is performed by examining, for example, the total packet number 1520, and the packet flag (for example, packet flag 1550) and packet length (for example, packet length 1560) of each packet descriptor (for example, packet descriptor 1530). By examining such data, the PADM 1076 is able to determine where each of the constituent packets starts and ends.

In particular, the PADM 1076 examines each constituent packet to ensure that the constituent packet is a complete LAN frame/packet. If the constituent LAN frame/ packet is not complete, then the PADM 1076 retains the incomplete frame/packet and waits until the rest of the LAN frame/packet is received (presumably in a subsequent encapsulated frame/packet) or until there is a timeout. When the rest of the LAN frame/packet is received, the PADM 1076 assembles the complete LAN frame/packet and forwards the complete LAN frame/packet to the bridge 1074.

Referring to Figure 17, the above implementation of the operation 1630 is depicted in a diagram 1700 for a received Ethernet-style encapsulated packet 1710. For simplicity, the received encapsulated packet 1710 is assumed to be the same as the transmitted packet described with reference to Figure 14. However, it is understood that variations between a transmitted packet and a received packet might occur in some embodiments. The received packet 1710 includes the WLAN header 1440, the EIW header 1430, and the string of constituent Ethernet packets 1420.

As the PADM 1076 processes the received packet 1710, if a constituent Ethernet packet is complete, then the packet (for example, a packet 1720) is provided to the bridge 1074. If a constituent Ethernet packet is incomplete, then the incomplete packet is stored in a waiting queue 1730 (which need not be located in the PADM 1076) until the rest of the packet arrives or until a timeout occurs. The diagram 1700 shows an incomplete packet 1740 being stored in the waiting queue 1730. This may occur, for example, if an Ethernet packet spans two WLAN packets. When the packet is complete, the packet is sent to the bridge 1074. Note that a WLAN packet may include, for example, one complete Ethernet packet and one partial Ethernet packet.

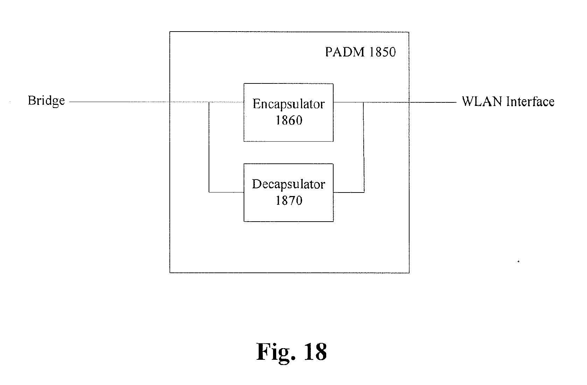

Referring to Figure 18, to further describe the decapsulation process 1130 of Figure 11, a PADM 1850 is depicted that provides an implementation of either of the PADMs 1016 or 1076. The PADM 1850 includes an encapsulator 1860 and a decapsulator 1870. The encapsulator 1860 and the decapsulator 1870 are communicatively coupled to a bridge and a WLAN format interface. Given the components of the PADM 1850, the PADM 1850 may, more specifically, be referred to as a packet encapsulation/decapsulation module. In operation, the encapsulator 1860 accepts Ethernet packets from the bridge and encapsulates the Ethernet packets, as described above. The encapsulated data is then provided to the WLAN format interface. In operation, the decapsulator 1870 receives encapsulated data from the WLAN format interface. The decapsulator 1870 decapsulates the received data as described above, and provides the decapsulated data to the bridge assuming there is no timeout.

As can be appreciated, other implementations are possible and envisioned. For example, another implementation combines an encapsulator and a decapsulator. Yet another implementation uses a virtual Ethernet interface feature of Linux. Note that other implementations of an AP or a modem (STA) may send an encapsulated packet from a WLAN format interface directly to a bridge. The bridge determines that the packet is encapsulated and sends the packet to a PADM.

Continuing with the process 1600 of Figure 16, the AP determines that the constituent frames/packets are to be sent to a router (1640). This operation (1640) may be performed, as with many operations, at a different point in the process 1600. In the implementation of Figure 10, the bridge 1074 determines that the frames/packets are to be sent to the router 1090. The AP then sends the constituent frames/packets to the router over a LAN interface (1650). In the implementation of Figure 10, the bridge 1074 sends the constituent frames/packets to the LAN interface 1077, which sends the packets to the router 1090 over the LAN network 1082.

The router receives (1660) and processes (1670) the frames/packets. Processing may include, for example, sending the packets, or a portion thereof, to a further destination such as a web site with which a host is communicating or attempting to communicate. Further, in implementations in which an encapsulated packet includes LAN packets from multiple hosts, the router may send the underlying information to multiple web sites.

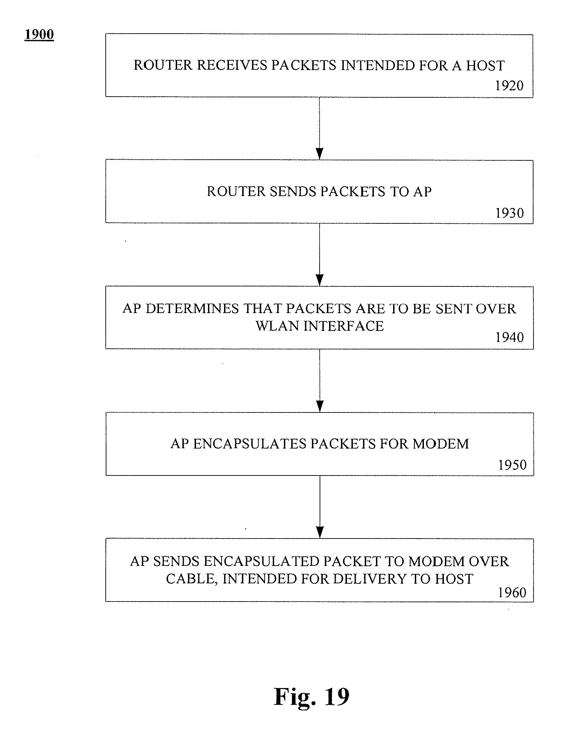

Referring to Figure 19, a process 1900 depicts a process for receiving frames/packets at an AP from a router. The frames/packets are encapsulated, and the encapsulated frames/packets are transmitted from the AP. The transmitted encapsulated frames/packets are intended for receipt by a modem, and the constituent frames/packets are intended for eventual delivery from the modem to one or more hosts. This process 1900 is also referred to as a downlink transmission process.

The process 1900 of Figure 19 includes a router receiving one or more frames/packets intended for one or more hosts (1920), and the router sending the received frame(s)/packet(s) to an AP (1930). The router may receive frames/packets from, for example, one or more web sites that are attempting to communicate with one or more hosts. In the implementation of Figure 10, the router 1090 receives frames/packets from the Internet 1095. The router 1090 then sends the received frames/packets over the LAN network 1082 to the LAN interface 1077 of the AP 1030.

The AP determines that at least one received frames/packet is to be sent through a WLAN format interface and cable interface to the modem (1940) via a cable network. In the implementation of Figure 10, the LAN interface 1077 routes the received packets (which may be Ethernet or other LAN packets) to the bridge 1074. The bridge 1074 determines that a packet is to be sent through the WLAN format interface 1075 and the cable interface 1080 to, for example, the modem 1010 using the cable network 1040.

The AP encapsulates multiple packets for transmission to the modem, including the one or more received packets (1950). Note that the multiple packets are all received from the router, but may have been received at the router from one or more different sources (for example, different web sites). Further, the encapsulation may include the packet (s) received in operation 1920 and packets received earlier and stored in a queue.

Regarding the operation 1950, the bridge 1074 forwards the received packet(s) to the PADM 1076. The PADM 1076 queues the received packet(s), along with other packets intended for (for example) the modem 1010 and forms an encapsulated WLAN packet for the available downlink timeslot for the modem 1010. The PADM 1076 maintains a separate queue for each modem (also referred to as a station), including a first queue for the modem 1010 and a second queue for the modem 1020. The encapsulation is as described earlier in describing the PADM 1016 in conjunction with Figures 11-15.

The AP sends the encapsulated packet to the modem over a cable connection, intended for eventual delivery to one or more hosts (1960). In the implementation of Figure 10, the PADM 1076 prepares a WLAN packet for each of the modems 1010 and 1020 in a round-robin manner. The PADM 1076 then supplies the prepared WLAN packets to the WLAN format interface 1075 for insertion into the corresponding downlink timeslots in the TDF superframe structure. The cable interface 1080 then transmits the WLAN encapsulated packets from the WLAN format interface to the modems 1010 and 1020, using the TDF superframe structure.

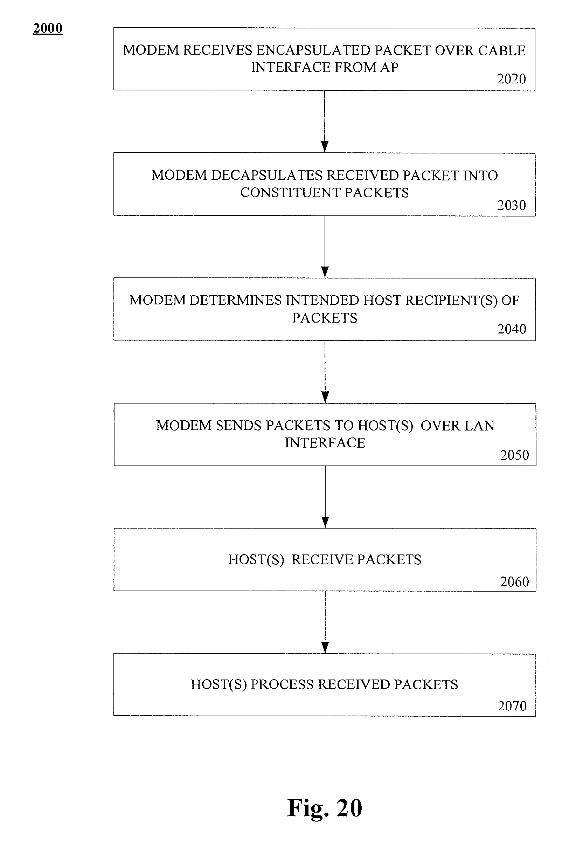

Figure 20 depicts a process 2000 for receiving encapsulated packets, decapsulating the packets, and delivering the constituent packets. This process 2000 is also referred to as a downlink reception process. The process 2000 includes a modem receiving an encapsulated packet from an AP over a cable interface (2020). In the implementation of Figure 10, the modem 1010 receives the encapsulated packet at the cable interface 1084 over a cable network 1040. The cable interface transfers the encapsulated packet to the WLAN format interface and the PADM 1016. The modem then decapsulates the received packet to extract the constituent packets that make up the encapsulated packet (2030). In the implementation of Figure 10, the PADM 1016 performs decapsulation of the WLAN packet and provides the constituent LAN packets to the bridge 1014. The decapsulation may be performed, for example, as described earlier for the PADM 1076 in the discussion of Figs. 16-18.

The modem determines that the constituent packets are to be sent to one or more intended host recipients (1940). This operation (2040) may be performed, as with many operations, at a different point in the process 2000. For example, the operation 2040 may be performed in conjunction with either of operations 2030 or 2050. In the implementation of Figure 10, the bridge 1014 determines that the packets are to be sent to the host(s).

The modem then sends the constituent packets to the host(s) over an LAN interface (2050). In the implementation of Figure 10, the bridge 1014 sends the constituent packets to the LAN interface 1015, which sends the packets to one or more of the host1 1054 and the host2 1056 over the LAN network 1052. The one or more hosts receive (2060) and process (2070) the packets. Processing may include, for example, a personal computer storing a multi-media file received over the Internet, or a personal digital assistant (PDA) displaying an electronic message (also received over the Internet) for viewing and interaction by a user. Many types of end-user devices that interface with a LAN network are possible recipients of the downloaded packets. Such devices may be end-user devices or lower-tier access points functioning via LAN 1052.

Wireless Dual Mode Device (WDMD) Modem

In the network architecture of Figure 1, example modem stations (STA) 120 and 140 are depicted as having WLAN RF ports to support wireless devices 138 and 158. In one embodiment, the STAs contain the WLAN RF interface ports as an end user interface. As such, a STA may have both a cable interface supporting communications between an AP and the STA, and a WLAN RF external port to support wireless user devices. A STA having a cable interface and a WLAN external port may also be termed a wireless dual mode device (WDMD). In the embodiment of Figure 1, such a WDMD can use mature WiFi chipsets to realize the WLAN format generation and RF generation functions of the STA. An example system, such as in Figure 1, that includes one or more APs, a cable network, and one or more WDMDs performing the function of a STA may also be termed an asymmetric data over coaxial cable (ADoC) system. In comport with the above description of a TDF system, one or more protocol compliant ADoC access points (APs) and one or more stations (STAs) are deployed in the ADoCs cable access network. Thus, as used herein, the terms "ADoC system" and "TDF system" may be considered interchangeable because the ADoC system is a particular implementation of a TDF system. In the ADoC system, as in Figure 1, the AP and STAs are connected via couplers in the hierarchy tree structure of a cable network that includes elements such as cable, splitters, amplifiers, relays, repeaters, switches, converters, and the like that are typical of cable network configurations.

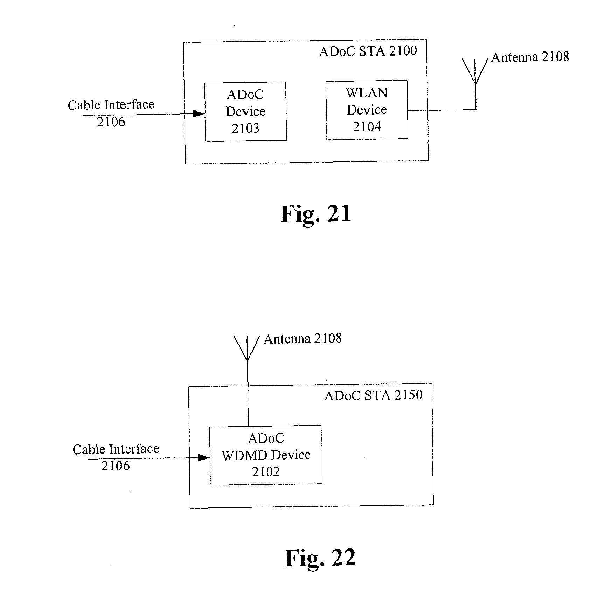

Referring to Figure 21, an inventive implementation for the hardware implementation of an ADoC STA 2100 is to integrate two devices, an ADoC device 2103 and a WLAN device 2104, into a single STA for the ADoC system. The ADoC device 2103 functions to connect with a coaxial cable interface 2106 to support bi-directional data communication in a cable network using TDF principles, while the WLAN device 2104 functions to connect with an antenna 2108 to support bi-directional data communication in a WLAN network. The STA 2100 swaps the data frames between ADoC device 2103 and WLAN device 2104, if needed, in order to enable wireless-enabled devices such as PCs, PDAs, routers, switches, printers, smart terminals, and the like in the WLAN network to access an IP network, such as the Internet or an Intranet, via the ADoC STA. The wireless devices may be located within wireless range of the STA, which may be located in a home or business setting.

In one embodiment, the STA architecture presented in Figure 21 requires two standalone devices for channel encoder/decoder and data processing to provide Internet/Intranet access functionality for wirelessly connected device in the home or business WLAN. These two standalone devices may be combined, sharing some common subcomponents, to form a WDMD which is capable of switching between ADoC mode/cable interface mode/time division multiplex mode/TDF mode and wireless mode/WLAN mode. The single WDMD can provide the same access as the standalone devices for local networks.

The dual mode ADoC device of Figure 22 can support both ADoC mode and WLAN mode and switch between these two modes as needed. In ADoC mode, the dual mode device of Figure 22 operates as an ADoC STA. While in WLAN mode, the dual mode device operates as a WLAN access point.

In order to realize the dual mode device 2102 of Figure 22, the standard ADoC device 2103 is modified and evolved based on a mature WLAN device. The dual mode device 2102 is different from the WLAN device 2104 mainly in two aspects. First, the dual mode device 2102 transmits RF energy in an ADoC frequency band (about 1 GHz) while in ADoC mode instead of standard IEEE 802.11 frequency band (about 2.4 GHz). Second, in the media access control (MAC) layer, it does not utilize the conventional 802.11 DCF (Distributed Coordination Function) or PCF (Point Coordination Function) mechanism to exchange MAC frames in ADoC mode. Instead, dual mode device 2102 uses TDF protocol, which is based on a time division multiple access (TDMA) method, to transmit MAC frames in ADoC mode.

In one embodiment of a dual mode device, as shown in Figure 22, the dual mode ADoC device 2102 is connected with a coaxial cable interface 2106 for the interconnection with a cable access network, and at the same time, it is connected with an antenna 2108 to support bi-directional data communication in a WLAN network. The ADoC STA 2150 housing the dual mode device swaps the data frames received during these two modes from this dual mode ADoC device 2102 if needed.

Hardware Architecture of the Dual Mode ADoC Device

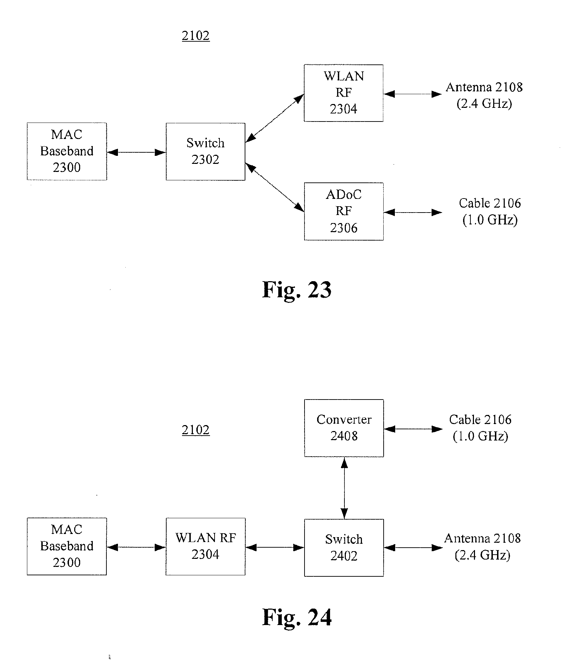

According to one hardware embodiment of the dual mode ADoC device 2102 shown in Figure 23, a switch 2302 is provided which is a circuit configured to switch between the WLAN RF circuit 2304 and ADoC RF circuit 2306. The switch 2302 can be controlled by the MAC layer software. This implementation may require that some versions of a WLAN chipset be modified and the switch 2302 is added to the modified chipset. In some instances, this WLAN chipset modification is undesirable.

According to another hardware embodiment shown in Figure 24, the location of a switch 2402 can be changed in terms of adjacency with the device's MAC baseband part 2300. In this embodiment, the converter 2408 translates the 2.4 GHz WLAN RF stage 2404 frequency to the 1 GHz ADoC spectrum. This lower frequency output is useful to propagate relatively long distances in a coaxial cable. Note that the MAC baseband part 2300 may be characterized as a communication device configured to enable a user device to communicate with the dual-mode ADoC device 2102. In contrast to the implementation of Figure 23, the implementation of Figure 24 is external to an existing WLAN chipset, and as such, does not require modifying a WLAN chipset. Thus, the configuration of Figure 24 may, in some instances, be preferable to the Figure 23 configuration.

MAC Layer Procedure of the Dual Mode ADoC Device

In a dual mode ADoC device 2102, the basic access method is the TDF protocol of Figure 5, which utilizes aspects of the IEEE 802.11 MAC layer protocol as described above. Referring to Figure 5, in the TDF superframe protocol, there are fixed tdfTotalTimeSlotNumber timeslots per TDF superframe. A TDF superframe includes one Sync timeslot used to send clock synchronization information from an ADoC AP to an ADoC STAs, one contention timeslot used to send a Registration request for an uplink timeslot allocation, tdfUplinkTimeSlotNumber uplink timeslots used by the registered ADoC STAs to send data and some management frames to an ADoC AP one after another, and tdfDownlinkTimeSlotNumber downlink timeslots used by an ADoC AP to transmit data and some management frames to STAs.

With this TDF protocol, the dual mode ADoC device 2102 in STA mode is active during the Sync slot, the contention timeslot, the allocated uplink timeslot (for instance, timeslot k) and the downlink timeslots. In the remaining timeslots (i.e., from timeslot 2 to timeslot k; and from timeslot k+1 to timeslot m), the dual mode ADoC device is inactive in the cable interface (TDF protocol) function, and as a result, can switch to WLAN mode. This mode transition can occur if there is a switch available to change the operating RF from an ADoC frequency band to a WLAN frequency band.

In one embodiment, a detailed MAC layer procedure in a dual mode ADoC device may be as follows for WLAN operation in the uplink timeslot period:

1. Once an ADoC STA was started and successfully allocated an uplink timeslot, for example, timeslot k, for uplink traffic transmission, the dual mode device determines if k > (m+2)/2. If k ≥ (m+2)/2, it means the duration of the interval (timeslot 2, timeslot k), indicated by the interval T (timeslot 2, timeslot k), is at least equal to the duration of interval (timeslot k, timeslot m), indicated by interval T(timeslot k, timeslot m). As a result, the dual mode ADoC device operates in WLAN mode during the (timeslot 2, timeslot k) interval period. On the other hand, if k < (m+2)/2, it means interval T (timeslot 2, timeslot k) is shorter than an interval T (timeslot k, timeslot m). Consequently, the dual mode ADoC device operates in WLAN mode during the (timeslot k, timeslot m) interval period. Note that the determination of whether the period (slot 2, slot k) > the period (slot k, slot m) produces the criteria (k-2)>(m-k), which in turn produces the criteria k>(m+2)/2. Further, in the implementation described, the WLAN mode may be selected for the longer period. Other implementations, however, operate in WLAN mode during the shorter period, or change between modes multiple times in a superframe.

2. In the case that the dual mode ADoC device operates in WLAN mode during the (timeslot 2, timeslot k) period, for other timeslots in a TDF superframe, the dual mode ADoC device may operate in ADoC mode as ADOC STA and act in the manner in accordance with the standard ADoC TDF protocol. So, when the dual mode ADoC device enters the timeslot 2 in ADoC mode, it configures the RF switch 2302 to change the operating frequency to the WLAN spectrum, and acts as a WLAN access point for user wireless devices in the user's wireless network in accordance with the standard wireless procedure.

As time goes on and is approaching the timeslot k, and there is no time left for at least one WLAN frame exchange before the beginning of timeslot k, the dual mode device 2102 sends a CTS (clear to send) signal to all STAs in the residential WLAN. The Duration field in the CTS frame equals the duration from the timeslot k in this superframe to the timeslot 2 in the next superframe. Upon receiving the CTS message all STAs update their network allocation vector (NAV) and refrain from accessing the WLAN medium for the duration reported by the CTS message. In this way, the dual mode device typically causes all STAs to keep silent for the period from the timeslot k in this superframe to the timeslot 2 in the next superframe by pretending there is another entity to reserve the WLAN medium for the duration. After that, the device controls the switch to change the operation spectrum to back to the ADoC frequency band and operate in accordance with the TDF procedure.

When it is time for the dual mode device 2102 to enter the timeslot 2 in the next superframe, the device 2102 repeats the same mode switch procedure and the STAs in the user WLAN also start to use this available infrastructure WLAN for communication again because the silence duration, indicated by the CTS, expires at the same time.

In contrast, for the case where the dual mode ADoC device operates in WLAN mode during the (timeslot k, timeslot m) period, for other timeslots in a TDF superframe, the dual mode ADoC device operates in ADoC mode as a STA. When the dual mode ADoC device 2102 enters the timeslot (k+1) in ADoC mode, it configures the switch 2302 to change the operating frequency to WLAN spectrum, and acts as an access point for the users WLAN. Once the STA passes the timeslot (m-1), the dual mode device tries to send the CTS signal during the timeslot m, with the duration field being equal to the duration from the beginning of the downlink timeslots in this superframe to the timeslot (k+1) in the next superframe. After that, the dual mode device 2102 controls the switch 2302 to change the operation spectrum to ADoC frequency band and operate in accordance with the ADoC TDF procedure. Thus, when the dual mode device enters the timeslot (k+1) in the next superframe, it performs the same mode switch procedure again, as described before.

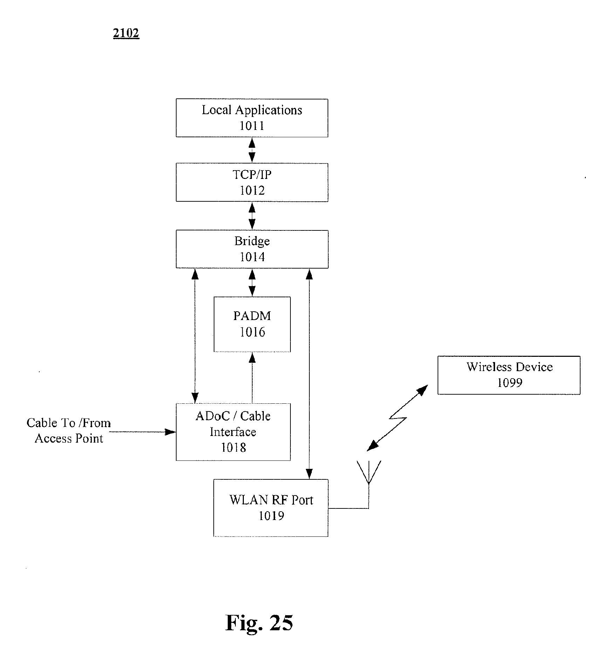

According to one embodiment, the dual mode device 2102 is integrated into a modem (e.g., 1010, 1020, etc.) from Figure 10. Figure 25 shows an example of such an embodiment. As before in Figure 10, the Figure 25 dual mode device includes a local applications layer 1011, a TCP/IP layer 1012, a bridge 1014, and a PADM 1016. In the embodiment of Figure 25, a WLAN RF port is used to communicate wirelessly with wireless devices 1099. The ADoC cable interface 1018 is the interface utilized by the cable network allowing a STA to communicate using the TDF protocol with an AP.

When the dual mode device is operating or performing standard WLAN communication (i.e., when operating in the appropriate time period), the device allows the wireless device(s) 1099 to connect to the internet/intranet via the associated AP. In this embodiment, the wireless user would request an IP address (e.g., a webpage address) by sending a request for the IP address to a modem over the wireless medium through a WLAN RF port 1019. The modem then relays the request over the cable network to the ADoC AP via the ADoC cable interface 1018, then to the router, then to the internet/intranet IP network. In this embodiment, the dual mode device 2102 includes an ADoC Interface or device 1018 rather than a LAN interface.

In one embodiment, because the dual mode device 2102 includes shared operation of some common functional elements, the dual mode device generally does not operate in both ADoC (time division protocol) mode and WLAN mode simultaneously. Accordingly, the two modes are generally considered exclusive in operation. During WLAN mode operation, wireless transaction data, such as data from a user wireless device, that is to be uplinked to an AP are placed in a buffer in the dual mode device. The wireless data in the buffer are later recalled and transported (uplinked) to the AP when the dual mode device re-enters the ADoC mode. In other embodiments where greater processing capability permits, an overlap of ADoC and WLAN modes can be realized. However, the separate mode embodiment is further discussed herein.

When the modem's dual mode device operates in WLAN (i.e. wireless) mode, the device acts as a WLAN access point, and the user wireless device acts as WLAN Station. In this instance, the dual mode device receives the request from the wireless device via the wireless link between the modem and the user device. The dual mode device relays the received request to the bridge, and the bridge determines if the dual mode device needs to send the request out over the cable via the ADoC interface in the dual mode device, or send the request to other wireless devices in the wireless network, based on the destination address information in IP packets for this request. Note that wireless mode operation also allows for peer to peer operation between wireless user devices.

In order for the request to establish an external connection to the AP, the dual-mode device holds or stores that request until the dual mode device enters ADoC mode (i.e., wired mode), at which time the dual mode device acts as an ADoC station and sends out the request over the wired network to the ADoC AP, via the ADoC interface.

In order for the request to establish an internal connection with other wireless devices in the user wireless network, the dual mode device may enter WLAN mode and store that request. If the dual mode device then enters ADoC mode, the dual mode device waits until it re-enters the WLAN mode (i.e., wireless mode), at which time it acts as a WLAN access point and sends out the request over the wireless medium to the destination user device via the WLAN RF port. When the dual mode device receives a response from the associated ADoC AP in the cable network, or other devices in the local network, the reverse process is performed.

As is clear from the foregoing discussion, in at least some embodiments, common circuitry or software may be used to perform much of the processing associated with both the WLAN mode and the ADoC mode. For example, the reception and depacketizing of data from both modes, as well as converting between the two modes may be performed by a common unit. Various applications potentially requiring such conversion include (1) a modem receiving a WLAN mode input from a wireless device (such as a request for Internet access) and sending the input out using the ADoC mode, and (2) a modem receiving requested Internet data in the ADoC mode and sending the data to a device using the WLAN mode. These scenarios typically involve a conversion between different protocols.

Various implementations of a dual-mode device use a communication unit to enable communication in one or more modes. A communication unit may include, for example, dual mode ADoC device 2102, or portions thereof such as, for example, MAC baseband 2300, WLAN RF 2304, and ADoC RF 2306 as shown in Figures 23 and 24. Note that a modem may include not only a dual-mode device as described above, but may also include interfaces to enable communication across other networks (in addition to WLAN and ADoC). Such other networks may include, for example, a LAN network. Accordingly, a modem may include, for example, dual-mode device 2102 enabling communication across WLAN and ADoC networks, and a LAN interface as depicted in Figure 1.

Throughput Expansion for the Wireless Dual Mode Device

As described above, opportunities for WLAN mode communications of the WDMD with the user wireless network devices can be limited to available opportunities in the uplink timeslot period of Figure 5 (timeslots 2 to m), if available. In order to improve the WLAN traffic throughput, the downlink timeslot portion (timeslots m+1 to m+n+1) of the TDF superframe may be used when ADoC operation in the downlink timeslot period is not pending in a superframe.

In one embodiment of the TDF system, a TDF superframe, as shown in Figure 5, periodically transmits an IEEE 802.11 beacon frame as part of the sync slot (timeslot 0) to synchronize the WDMD STA to the associated AP. A typical beacon frame is a management frame that contains header and frame body information. As with other frames, the header includes source and destination MAC addresses as well as other information regarding the communications process. The destination address may be set to all ones, which is the broadcast medium access control (MAC) address. This instructs all STAs on the applicable channel to receive and process the beacon frame.

In one embodiment, the beacon's frame body carries information useful for identification and synchronization of STAs by APs. Some beacon frame body information includes a beacon interval that represents the amount of time between beacon transmissions, a timestamp used by a STA to update its local clock and enables synchronization among all stations that are associated with the same access point, a service set identifier (SSID) that identifies a specific AP and its associated STAs, a supported rates field that carries information describing the rates that are supported by the AP, and a traffic indication map (TIM) to provide additional information useful to STAs.

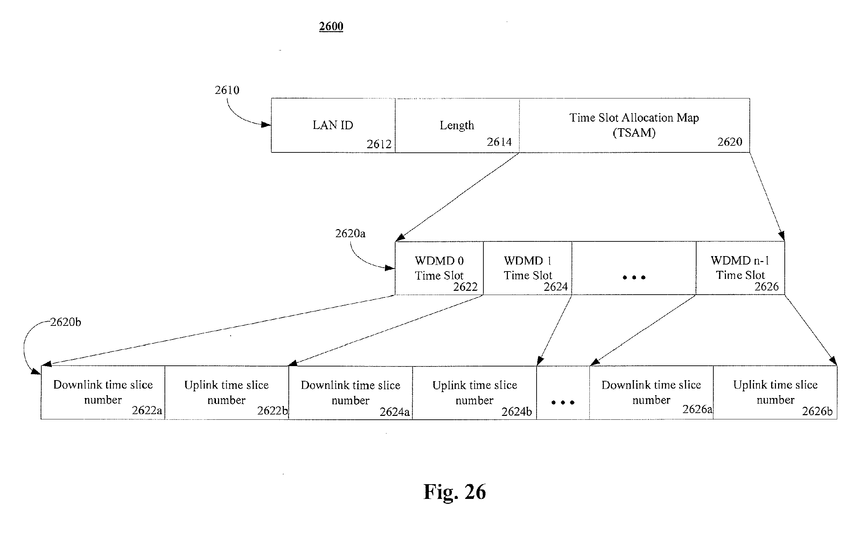

According to an aspect of the present invention, the TIM of the beacon frame contains a timeslot allocation map (TSAM). Figure 26 depicts an example TSAM subframe. The TSAM subframe 2610 of Figure 26 is an information element contained within a beacon management frame which is transmitted at a regular beacon interval period by an AP. The information element 2610 is a variable-length subframe that includes an element ID number 2612, a length 2614, and a variable-length TSAM component 2620.

The Element ID 2612, if implemented using a wireless LAN, is assigned a value 51, which is reserved in IEEE 802.11. The length field 2614 is the length of the TSAM component 2620. The expanded TSAM component 2620a contains n fields which are WDMD STA 0 timeslot 2622, WDMD STA 1 timeslot 2624, and WDMD STA n-1 timeslot 2626. The n is the maximum number of WDMDs that the system may accommodate. Each WDMD STA i timeslot field is further expanded 2620b into two subfields, the downlink time slice number, and the uplink time slice number, where the first subfield indicates the number of time slices assigned to the corresponding STA for its downlink traffic, and the second subfield indicates the number of time slices assigned to the corresponding STA for its uplink transmission. Note that the downlink and uplink here denote the direction between an AP and a STA (WDMD). In Figure 26, WDMD 0 timeslot 2622 contains downlink and uplink time slice numbers 2622a and 2622b respectively. WDMD 1 timeslot 2624 contains downlink and uplink time slice numbers 2624a and 2624b respectively. WDMD n-1 timeslot 2626 contains downlink and uplink time slice numbers 2626a and 2626b respectively. Note that Figure 26 provides an exemplified TSAM format definition. Other format definitions that provide similar information comport with the principles and spirit of the invention.

Using the information contained in the TSAM, the WDMD can determine whether there is downlink timeslot traffic destined for the WDMD. If there is none for the WDMD during the superframe period, then the WDMD can advantageously use the opportunity to switch to WLAN mode and service the user wireless devices with the WLAN RF port of the WDMD while the WDMD is in the downlink timeslot period. The same TSAM information can be used to determine uplink timeslot availability in ADoC mode as well so that the unused timeslots periods for this WDMD may also be used for WLAN operation as described above.

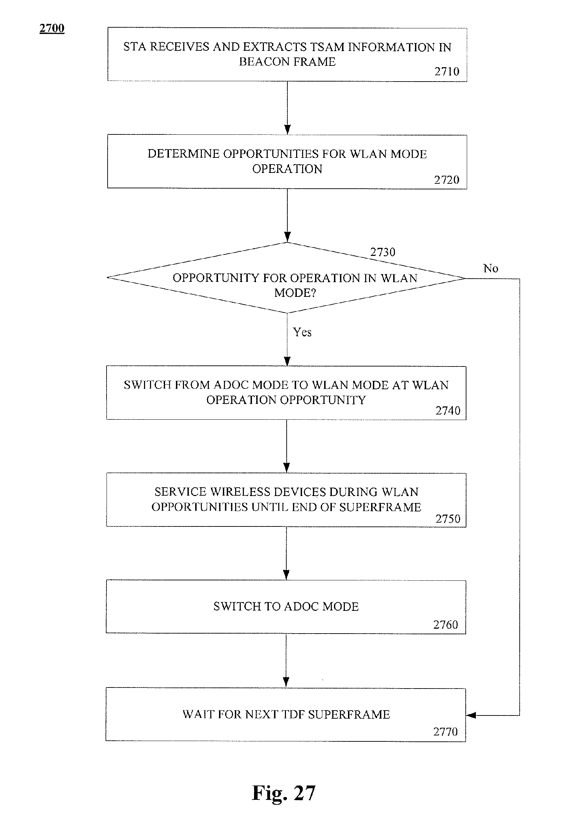

Figure 27 is a flow diagram of a method used by a WDMD STA to determine when it may operate in WLAN mode to service wireless user devices using the WLAN RF port instead of operating in the ADoC communication mode. Initially, the WDMD STA receives and extracts TSAM information from a beacon frame in step 2710. During this step, the receiving WDMD STA determines if the beacon frame contains TSAM information related to the WDMD STA by checking the service set identifier (SSID) of the beacon frame. Assuming the WDMD detects valid TSAM information directed to the WDMD STA, then the TSAM information is extracted for examination. At step 2720, the extracted TSAM information, including uplink and downlink timeslot allocations for a particular WDMD, is used to determine opportunities for WLAN mode operation based on the anticipated ADoC operation timeslots. Calculations or other such determinations of opportunities for WLAN mode operation may be performed by a single processor, multiple processors or other devices, such as application specific integrated circuits, gate arrays, or other logic devices that can logically evaluate opportunities for WLAN mode operation within a TDF superframe using the digital information provided by the TSAM. As such, the calculation or determination is considered to be accomplished by a processor that includes any form of central processing unit, multiprocessor, logic hardware, firmware, software, or any combination thereof.

The determination of an opportunity for WLAN operation may include both an opportunity for operation in the uplink timeslot period or the downlink timeslot time period shown in the TDF superframe of Figure 5. As discussed above with respect to Figure 5, if for example, timeslot k is scheduled for an ADoC mode uplink, then opportunities for WLAN mode operation exist in the time period from slot 2 to k and from slot k+1 to slot m-1. Also, as discussed above, if there is no downlink data destined for reception by the WDMD STA, then there is an opportunity for WLAN RF port operation during the entire downlink timeslot period (timeslot m+1 to m+n+1) of the TDF superframe of Figure 5. If there is no opportunity or insufficient opportunity for operation in WLAN mode, the method 2700 moves from determination 2730 to 2770 to wait for the next superframe and its corresponding sync slot information to subsequently determine the next WLAN mode operation opportunity. It is also noted that if there is no downlink time slot opportunity, because there is a downlink scheduled within the TSAM for the STA, then a CTS signal is asserted by the STA on the WLAN RF interface such that communications with the STA by wireless devices is precluded in the downlink timeslot interval until at least the next superframe. If sufficient opportunity exists for operation in WLAN mode, then process 2700 moves from step 2730 to 2740 where the WDMD switches from ADoC mode which uses the cable interface to WLAN mode which uses the WLAN RF port. The function of switching may be performed by any combination hardware or software known to those of skill in the art including logic switching, relay switching, or any other form of electrical and or mechanical switching.

While in WLAN mode, at step 2750, the WDMD is able to service the user wireless devices using the WLAN RF port of the WDMD. This service of user wireless devices may continue in the available WLAN opportunity periods until the end of the TDF superframe. For example, if the TSAM indicates that no ADoC mode downlink is scheduled for the coming superframe, then the entire downlink timeslot period may be available for servicing user wireless devices. It is noted that during wireless device servicing under WLAN mode, the WDMD buffers data received via the wireless interface for later transmission to an AP during one of the scheduled uplink timeslots in the next occurring superframe.

At step 2760, the WDMD switches from WLAN mode to ADoC mode to accommodate receipt of the next superframe of information. This mode switch at superframe intervals is necessary for the WDMD to receive ADoC TDF superframe sync information using the ADoC TDF cable interface.

In one embodiment, efficient operation of the ADoC system occurs if the ADoC AP sends information traffic to each WDMD in an aggregate manner as long as it does not adversely affect a quality of service (QoS) for the applications. For example, in one embodiment, the AP may preferably send information traffic to each WDMD aggregately in dispersed superframe periods instead of consecutive superframe periods.

Based on above method 2700, the time period of operation in WLAN mode can be significantly increased if the downlink timeslot period is used for WLAN operations. This aspect significantly helps to improve the transmission throughput in the WLAN mode.

Features and aspects of described implementations may be applied to various applications. Applications include, for example, individuals using host devices in their homes to communicate with the Internet using an Ethernet-over-cable communication framework, as described above. However, the features and aspects herein described may be adapted for other application areas and, accordingly, other applications are possible and envisioned. For example, users may be located outside of their homes, such as, for example, in public spaces or at their jobs. Additionally, protocols and communication media other than Ethernet and IEEE 802.11 may be used. For example, data may be sent and received over (and using protocols associated with) fiber optic cables, universal serial bus (USB) cables, small computer system interface (SCSI) cables, telephone lines, digital subscriber line/loop (DSL) lines, satellite connections, line-of-sight connections, and cellular connections.

The implementations described herein may be implemented in, for example, a method or process, an apparatus, or a software program. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data transmission and reception. Examples of equipment include video coders, video decoders, video codecs, web servers, set-top boxes, laptops, personal computers, and other communication devices. As should be clear, the equipment may be mobile and even installed in a mobile vehicle.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), a read-only memory ("ROM") or any other magnetic optical, or solid state media. The instructions may form an application program tangibly embodied on a processor-readable medium such as any of the media listed above. As should be clear, a processor may include, as part of the processor unit, a processor-readable medium having, for example, instructions for carrying out a process.

Regarding buffers and storage devices, note that a variety of devices throughout the described implementations typically include one or more storage devices or buffers. For example, although not explicitly indicated, the modems 1010 and 1020, and the AP 1030 (as well as a variety of other elements) typically include one or more storage units for storing data. Storage may be, for example, electronic, magnetic, or optical.

As is evident from the foregoing disclosure, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, packetizing the encoded stream according to any of a variety of frame structures, and modulating a carrier with the packetized stream. The information that the signal carries may be, for example, analog or digital information. The signal may be transmitted over a variety of different wired or wireless links, as is known.

## Claims

1. A method, the method comprising:

   receiving synchronization information by a device on a cable network;
   determining a time for wireless operation based on the synchronization information; and
   switching from a time division multiplexed mode to a wireless mode based on the determining step.

2. The method of claim 1, wherein the receiving step further comprises receiving synchronization information comprising a timeslot allocation number used in a time division multiplexed protocol that incorporates wireless protocol frames transmitted on the cable network.

3. The method of claim 1, wherein the receiving step further comprises receiving the synchronization information for a time division multiplexed superframe divided into multiple timeslots comprising a downlink timeslot for receiving, by the modem, data frames from an access point device, and an uplink timeslot for transmitting, by the modem, data to the access point device.

4. The method of claim 1, wherein the determining step further comprises determining a time for wireless operation based on a downlink timeslot allocation defining when data from an access point is transmitted to the modem.

5. The method of claim 4, wherein a time for wireless operation is a time slot that is available in a downlink portion of a time division multiplexed superframe.

6. The method of claim 1, wherein the determining step further comprises determining a time for wireless operation based on an uplink timeslot allocation defining when data from the modem is transmitted to an access point.

7. The method of claim 6, wherein a time for wireless operation is a time slot that is available in an uplink portion of a time division multiplexed superframe.

8. The method of claim 1, further comprising switching back to the time division multiplexed protocol mode at the end of a time division multiplexed protocol superframe.

9. The method of claim 1, wherein the step of switching from a time division multiplexed protocol mode to a wireless mode comprises switching from a first operating frequency to a second operating frequency.

10. An apparatus comprising:

a cable interface that transfers digital information using a time division multiplex protocol;
a wireless network interface that communicates with a wireless device using a wireless protocol;
a processor that determines a time for operation of the wireless network interface based on received synchronization information;
a switching function that changes operation of the apparatus from a first mode using the time division multiplex protocol to a second mode using the wireless protocol based on the time for operation determined by the processor.

11. The apparatus of claim 10, wherein the cable interface is connected to a cable network, and wherein the time division multiplexed protocol comprises uplink timeslots for transferring information from the apparatus to the cable network and downlink timeslots for transferring data from the cable network to the apparatus.

12. The apparatus of claim 11, wherein the apparatus operates in the second mode during a time interval of the downlink timeslots.

13. The apparatus of claim 10, wherein the received synchronization information comprises timeslot allocation information received via the cable interface.

14. The apparatus of claim 13, wherein the timeslot allocation information is a number of a downlink timeslot.

15. The apparatus of claim 10, wherein information frames transported across the wireless local area network interface have the same format as frames transported across the cable interface.

16. The apparatus of claim 10, wherein the switching function switches from the first mode that operates at a first frequency to the second mode that operates at a second frequency.

**100**

Fig. 1

Fig. 2

Fig. 3

Start

Find TDF Synchronization
frames before a timeout? — Yes → Enter TDF
mode

No

Scan for 802.11 network.
Find it? — Yes → Enter 802.11
mode

No

Fig. 4

| Sync Slot | Contention Slot | tdfUplinkTimeSlotNumber uplink slots | | | | | | | | tdfDownlinkTimeSlotNumber downlink slots | |
|---|---|---|---|---|---|---|---|---|---|---|---|
| Time Slot 0 | Time Slot 1 | Time Slot 2 | Time Slot 3 | Time Slot k | Time Slot m-1 | Time Slot m | Time Slot m+1 | Time Slot m+2 | | Time Slot m+n | Time Slot m+n+1 |

Superframe - - tdfTotal TimeSlot Number time slots

**Fig. 5**

Fig. 6

Fig. 7

Fig. 8

900

**Fig. 9**

Fig. 10

**1100**

```
┌─────────────────────────────────────────────────┐
│                                                 │
│           MODEM CONNECTS TO AP                  │
│                                           1110  │
└─────────────────────────────────────────────────┘
                        │
                        ▼
┌─────────────────────────────────────────────────┐
│                                                 │
│   HOSTS(S) SENDS PACKET(S) FOR RECEIPT BY ROUTER│
│                                           1120  │
└─────────────────────────────────────────────────┘
                        │
                        ▼
┌─────────────────────────────────────────────────┐
│                                                 │
│     MODEM RECEIVES PACKET(S) FROM HOST(S)       │
│                                           1130  │
└─────────────────────────────────────────────────┘
                        │
                        ▼
┌─────────────────────────────────────────────────┐
│   MODEM DETERMINES THAT PACKET(S) IS(ARE) TO BE │
│   SENT USING WLAN PACKET FORMAT VIA CABLE       │
│                INTERFACE               1140     │
└─────────────────────────────────────────────────┘
                        │
                        ▼
┌─────────────────────────────────────────────────┐
│                                                 │
│     MODEM ENCAPSULATES PACKETS FOR ROUTER       │
│                                           1150  │
└─────────────────────────────────────────────────┘
                        │
                        ▼
┌─────────────────────────────────────────────────┐
│   MODEM SENDS ENCAPSULATED PACKET TO AP OVER    │
│   CABLE, INTENDED FOR RECEIPT BY ROUTER         │
│                                        1160     │
└─────────────────────────────────────────────────┘
```

# Fig. 11

1200

1210

LAN
Header
1220

Data
1230

1240

WLAN MAC Header
1250

Data
1230

FCS
1260

**Fig. 12**

FIG. 13

FIG. 14

FIG. 15

FIG. 17

1600

```
AP RECEIVES ENCAPSULATED PACKET OVER CABLE
INTERFACE FROM MODEM
                                        1620
```

```
AP DECAPSULATES RECEIVED PACKET INTO
CONSTITUENT PACKETS
                                        1630
```

```
AP DETERMINES THAT CONSTITUENT PACKETS ARE FOR
ROUTER
                                        1640
```

```
AP SENDS PACKETS TO ROUTER OVER LAN INTERFACE
                                        1650
```

```
ROUTER RECEIVES PACKETS
                                        1660
```

```
ROUTER PROCESSES RECEIVED PACKETS
                                        1670
```

# Fig. 16

Bridge ——————————— ┌─────────────────────────────┐
                     │ PADM 1850                    │
                     │      ┌──────────────┐         │
                     │      │ Encapsulator │         │————— WLAN Interface
                     │      │    1860      │         │
                     │      └──────────────┘         │
                     │      ┌──────────────┐         │
                     │      │ Decapsulator │         │
                     │      │    1870      │         │
                     │      └──────────────┘         │
                     │                              │
                     └─────────────────────────────┘

# Fig. 18

**1900**

```
ROUTER RECEIVES PACKETS INTENDED FOR A HOST
                                        1920
```

```
ROUTER SENDS PACKETS TO AP
                                        1930
```

```
AP DETERMINES THAT PACKETS ARE TO BE SENT OVER
WLAN INTERFACE
                                        1940
```

```
AP ENCAPSULATES PACKETS FOR MODEM
                                        1950
```

```
AP SENDS ENCAPSULATED PACKET TO MODEM OVER
CABLE, INTENDED FOR DELIVERY TO HOST
                                        1960
```

# Fig. 19

2000

MODEM RECEIVES ENCAPSULATED PACKET OVER CABLE
INTERFACE FROM AP

2020

MODEM DECAPSULATES RECEIVED PACKET INTO
CONSTITUENT PACKETS

2030

MODEM DETERMINES INTENDED HOST RECIPIENT(S) OF
PACKETS

2040

MODEM SENDS PACKETS TO HOST(S) OVER LAN
INTERFACE

2050

HOST(S) RECEIVE PACKETS

2060

HOST(S) PROCESS RECEIVED PACKETS

2070

# Fig. 20

ADoC STA 2100

Antenna 2108

Cable Interface
2106

ADoC
Device
2103

WLAN
Device
2104

**Fig. 21**

Antenna 2108

ADoC STA 2150

Cable Interface
2106

ADoC
WDMD Device
2102

**Fig. 22**

2102

```
                                    ┌──────────┐
                                    │  WLAN    │
                                    │   RF     │◄──────► Antenna 2108
                                    │  2304    │         (2.4 GHz)
                                    └──────────┘
┌──────────┐      ┌──────────┐  ╱
│   MAC    │      │          │ ╱
│ Baseband │◄────►│  Switch  │◄
│   2300   │      │   2302   │ ╲
└──────────┘      └──────────┘  ╲
                                    ┌──────────┐
                                    │  ADoC    │
                                    │   RF     │◄──────► Cable 2106
                                    │  2306    │         (1.0 GHz)
                                    └──────────┘
```

# Fig. 23

```
                                    ┌──────────┐
                                    │Converter │        Cable 2106
                          2102      │  2408    │◄──────► (1.0 GHz)
                                    └──────────┘
                                          ▲
                                          │
                                          ▼
┌──────────┐     ┌──────────┐     ┌──────────┐
│   MAC    │     │          │     │          │        Antenna 2108
│ Baseband │◄───►│ WLAN RF  │◄───►│  Switch  │◄──────► (2.4 GHz)
│  2300    │     │  2304    │     │   2402   │
└──────────┘     └──────────┘     └──────────┘
```

# Fig. 24

2102

```
                    ┌──────────────────────┐
                    │  Local Applications   │
                    │         1011          │
                    └──────────────────────┘
                              ↕
                    ┌──────────────────────┐
                    │        TCP/IP         │
                    │         1012          │
                    └──────────────────────┘
                              ↕
                    ┌──────────────────────┐
                    │        Bridge         │
                    │         1014          │
                    └──────────────────────┘
                       ↕      ↕          ↕
                         ┌──────────┐
                         │   PADM    │
                         │   1016    │
                         └──────────┘
                              ↑
Cable To /From      ┌──────────────────┐              ┌──────────────────────┐
Access Point   ───▶ │  ADoC / Cable     │              │   Wireless Device     │
                    │   Interface       │              │        1099           │
                    │     1018          │              └──────────────────────┘
                    └──────────────────┘
                         ┌──────────────────┐
                         │  WLAN RF Port     │
                         │      1019         │
                         └──────────────────┘
```

**Fig. 25**

2600

2610

| LAN ID 2612 | Length 2614 | Time Slot Allocation Map (TSAM) 2620 |
|---|---|---|

2620a

| WDMD 0 Time Slot 2622 | WDMD 1 Time Slot 2624 | • • • | WDMD n-1 Time Slot 2626 |
|---|---|---|---|

2620b

| Downlink time slice number 2622a | Uplink time slice number 2622b | Downlink time slice number 2624a | Uplink time slice number 2624b | • • • | Downlink time slice number 2626a | Uplink time slice number 2626b |
|---|---|---|---|---|---|---|

**Fig. 26**

2700

```
STA RECEIVES AND EXTRACTS TSAM INFORMATION IN
BEACON FRAME                                  2710
```

```
DETERMINE OPPORTUNITIES FOR WLAN MODE
OPERATION                              2720
```

```
2730
OPPORTUNITY FOR OPERATION IN WLAN
MODE?
```
No

Yes

```
SWITCH FROM ADOC MODE TO WLAN MODE AT WLAN
OPERATION OPPORTUNITY                        2740
```

```
SERVICE WIRELESS DEVICES DURING WLAN
OPPORTUNITIES UNTIL END OF SUPERFRAME   2750
```

```
SWITCH TO ADOC MODE
2760
```

```
WAIT FOR NEXT TDF SUPERFRAME
2770
```

**Fig. 27**

**Europäisches Patentamt**
**European Patent Office**
**Office européen des brevets**

# EUROPEAN SEARCH REPORT

Application Number

EP 08 30 5681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/153815 A1 (SHE GEORGE GEEYAW [US] ET AL) 5 July 2007 (2007-07-05) <br> * paragraph [0025] - paragraph [0030] * <br> * paragraph [0033] * <br> * paragraph [0036] - paragraph [0037] * <br> * paragraph [0040] * <br> * figures 3-5,7 * | 1-16 | INV. <br> H04J3/06 <br> H04W88/06 <br> H04L12/28 |
| X | JP 2006 109256 A (MATSUSHITA ELECTRIC IND CO LTD) 20 April 2006 (2006-04-20) <br> * the whole document * | 1-16 | |
| A | WO 2006/075294 A (KONINKL PHILIPS ELECTRONICS NV [NL]; MERGLER IWO-MARTIN [GB]; JAMES MI) 20 July 2006 (2006-07-20) <br> * page 7, line 18 - line 27; figure 1.2 * <br> * page 11, line 3 - line 31 * | 1,10 | |
| A | US 2004/158649 A1 (OPHIR LIOR [IL] ET AL) 12 August 2004 (2004-08-12) <br> * paragraph [0020] - paragraph [0025]; figures 1,2,4 * | 1,10 | TECHNICAL FIELDS SEARCHED (IPC) <br> H04J <br> H04W <br> H04L |
| E | WO 2009/009918 A (THOMSON LICENSING [FR]; ZHANG JUNBIAO [US]; YU JINFEI [CN]; SUI CHENG) 22 January 2009 (2009-01-22) <br> * figures 1,3,5,9,10 * <br> * page 5, line 23 - page 6, line 10 * <br> * page 13, line 9 - page 14, line 17 * <br> * page 21, line 18 - line 34 * <br> * page 23, line 8 - line 18 * <br> * page 24, line 24 - line 34 * | 1-3, 10-12 | |

The present search report has been drawn up for all claims

| Place of search | Date of completion of the search | Examiner |
|---|---|---|
| The Hague | 11 March 2009 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5681

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2009

| Patent document cited in search report | | Publication date | Patent family member(s) | | Publication date |
|---|---|---|---|---|---|
| US 2007153815 | A1 | 05-07-2007 | WO | 2007079383 A2 | 12-07-2007 |
| JP 2006109256 | A | 20-04-2006 | NONE | | |
| WO 2006075294 | A | 20-07-2006 | CN | 101156375 A | 02-04-2008 |
| | | | EP | 1839409 A2 | 03-10-2007 |
| | | | JP | 2008527887 T | 24-07-2008 |
| US 2004158649 | A1 | 12-08-2004 | US | 2005034159 A1 | 10-02-2005 |
| WO 2009009918 | A | 22-01-2009 | NONE | | |

EPO FORM P0459

For more details about this annex : see Official Journal of the European Patent Office, No. 12/82